# EUROPEAN PATENT APPLICATION

(11) **EP 2 923 583 A1**
(43) Date of publication of application: **30.09.2015**
(21) Application number: 14163523.5
(22) Date of filing: 04.04.2014
(51) Int. Cl.: A23L 2/56, A23L 2/60, A23L 2/66

(54) **Nutrition beverages**

(30) Priority: 29.03.2014 US 201414229882
(71) Applicant: The Concentrate Manufacturing Company of Ireland, Hamilton HM 12 (BM)
(72) Inventor: Bradley, Dondeena, New York, NY New York 10075 (US); ROHRER, Ellen, Katonah, NY New York 10535 (US); McManus, Kathlene, Ossining, NY New York 10562 (US); Cerdena, Connie, Croton-on-Hudson, NY New York 10520 (US); KIM, Paul, Mohegan Lake, NY New York 10547 (US)
(74) Representative: Duxbury, Stephen

(57) **Abstract**

Nutrition beverage compositions including high concentrations of protein are provided. Methods of making nutrition beverage compositions including high concentrations of protein are provided.

## Description

### RELATED APPLICATIONS

This application claims priority from U.S. Patent Application No. 14/229,882, filed on March 29, 2014 and entitled *Nutrition Beverages,* which is a continuation-in-part of International Application No. PCT/US2012/057,872 (filed September 28, 2012) claiming priority to U.S. Provisional Applications Nos. 61/541,571 (filed September 30, 2011) and 61/607,244 (filed March 6, 2012), each of which is hereby incorporated herein by reference in its entirety for all purposes.

### FIELD OF THE INVENTION

This invention relates to nutrition beverages comprising high concentrations of protein.

### BACKGROUND

It has long been known to produce beverages of various formulations. Improved and new formulations are desirable to achieve desired nutritional characteristics, flavor, shelf life, appearance and other objectives. Beverages having a high concentration of protein can be beneficial for individuals that desire to increase protein intake and/or increase fluid intake. Beverages having a high concentration of protein are desirable among various demographics such as, for example, health conscious individuals, athletes, pregnant women, new mothers, women of a particular age group, elderly individuals (e.g., aged 65 and older), infirm individuals, individuals that have undergone bariatric surgery and the like.

### SUMMARY

The present invention provides nutrition beverages that comprise a high concentration of protein while having good taste characteristics. In certain aspects, nutrition beverages are provided that are clear and include a high concentration of protein. In other aspects, nutrition beverages are provided that include a high concentration of protein and have reduced sweetness compared with traditional nutrition beverages known in the art.

Accordingly, nutrition beverage compositions that contain high concentrations of protein are provided, for example for individuals desiring low volume, high protein beverages. According to certain aspects, beverages are provided which include between about 2 to about 10 grams of protein per about 2 to about 6 fluid ounces. According to one aspect, beverages are provided that include between about 6 to about 8 grams of protein per between about 3 to about 5 fluid ounces. According to one aspect, a beverage is provided that includes about 7 grams of protein in about 4 fluid ounces. Nutrition beverage compositions containing high concentrations of protein that are clear are also provided. Nutrition beverage compositions containing protein that have small (e.g., 4 ounce) serving sizes are further provided. Nutrition beverage compositions containing protein having a desirable taste profile are also provided. Nutrition beverage compositions containing protein having a reduced sweetness are also provided. Nutrition beverage compositions containing protein that are low calorie are additionally provided. Methods of making nutrition beverage compositions are also provided.

In accordance with one aspect, a clear high protein beverage composition is provided, comprising water, between about 4% and about 8% by weight protein and a flavorant. The beverage optionally has a turbidity of less than 10 nephelometric units. The protein may include one or both of alpha-lactalbumin and hydrolyzed collagen, which optionally may be present in a ratio of between about 60:40 to about 70:30 alpha-lactalbumin:hydrolyzed collagen. The protein may include one or both of whey protein hydrolysate and collagen, which optionally may be present in a ratio of between about 95:5 to about 85:15 whey protein hydrolysate:collagen. The flavorant may be selected from one or more of fruit flavors and botanical flavors. The beverage may have a protein content of at least about 5 grams of protein, at least about 6 grams of protein or at least about 7 grams of protein per about 4 fluid ounce serving, or have a protein content of about 7 grams of protein per about 4 fluid ounce serving. The beverage protein may have a protein digestibility corrected amino acid score of at least about 0.9 or of about 1.0. The beverage may have a sweetness of less than about 6° Brix. The beverage may further include lactose. The beverage may be substantially lactose-free. The beverage may be sweetened or unsweetened. The beverage may optionally include a colorant.

In accordance with another aspect, a high protein beverage composition is provided, comprising water and between about 4% and about 8% by weight whey protein isolate (e.g., alpha-lactalbumin) and hydrolyzed collagen, wherein the beverage has a sweetness of less than about 6° Brix. The beverage may have a protein content of at least about 5 grams of protein, at least about 6 grams of protein or at least about 7 grams of protein per about 4 fluid ounce serving, or have a protein content of about 7 grams of protein per about 4 fluid ounce serving. The beverage protein may have a protein digestibility corrected amino acid score of at least about 0.9 or of about 1.0. The beverage may further include lactose. The beverage may be substantially lactose-free. The beverage may be sweetened or unsweetened. The beverage may optionally include a colorant.

In accordance with another aspect, a high protein beverage composition is provided, comprising water and between about 4% and about 8% by weight whey protein isolate (e.g., alpha-lactalbumin), wherein the beverage has a sweetness of less than about 6° Brix. The beverage may have a protein content of at least about 5 grams of protein, at least about 6 grams of protein or at least about 7 grams of protein per about 4 fluid ounce serving, or have a protein content of about 7 grams of protein per about 4 fluid ounce serving. The beverage protein may have a protein digestibility corrected amino acid score of at least about 0.9 or of about 1.0. The beverage may further include lactose. The beverage may be substantially lactose-free. The beverage may be sweetened or unsweetened. The beverage may optionally include a colorant.

In another aspect, a method for making a clear high protein beverage is provided, comprising combining, in any order water, between about 4% and about 8% by weight protein, and a flavorant. The beverage optionally has a turbidity of less than 10 nephelometric units. The protein may include one or both of alpha-lactalbumin and hydrolyzed collagen, which optionally may be present in a ratio of between about 60:40 to about 70:30 alpha-lactalbumin:hydrolyzed collagen. The protein may include one or both of whey protein hydrolysate and collagen, which optionally may be present in a ratio of between about 95:5 to about 85:15 whey protein hydrolysate:collagen. The flavorant may include one or more of fruit flavors and botanical flavors. The beverage may have a protein content of at least about 5 grams of protein, at least about 6 grams of protein or at least about 7 grams of protein per about 4 fluid ounce serving, or have a protein content of about 7 grams of protein per about 4 fluid ounce serving. The beverage protein may have a protein digestibility corrected amino acid score of at least about 0.9 or of about 1.0. The beverage may have a sweetness of less than about 6° Brix. The beverage may further include lactose. The beverage may be substantially lactose-free. The beverage may be sweetened or unsweetened. The beverage may optionally include a colorant.

In yet another aspect, a method for making a high protein beverage is provided, comprising combining, in any order water, between about 4% and about 8% by weight whey protein isolate and hydrolyzed collagen, and a flavorant. The beverage may have a protein content of at least about 5 grams of protein, at least about 6 grams of protein or at least about 7 grams of protein per about 4 fluid ounce serving, or have a protein content of about 7 grams of protein per about 4 fluid ounce serving. The beverage protein may have a protein digestibility corrected amino acid score of at least about 0.9 or of about 1.0. The beverage may have a sweetness of less than about 6° Brix. The beverage may further include lactose. The beverage may be substantially lactose-free. The beverage may be sweetened or unsweetened. The beverage may optionally include a colorant.

According to another aspect, a high protein beverage is provided as a nutritional beverage. According to an exemplary embodiment, a clear high protein beverage composition for use as a nutritional beverage includes water, a flavorant and between about 6 grams to about 8 grams of protein in about 4 fluid ounces of the nutritional beverage. Alternatively, the nutritional beverage includes between about 3 grams to about 4 grams of protein in about 2 fluid ounces of the nutritional beverage. According to one aspect, a clear high protein nutritional beverage as described herein is provided in about 2-4 fluid ounce portions. According to one aspect, an individual consumes several 2-4 fluid ounce portions at various times during the waking hours to meet an average daily requirement of protein. Accordingly, a method of providing protein to an individual includes the individual ingesting at various times during waking hours between about 10 to about 15 four fluid ounce portions of a clear high protein beverage composition having between about 6 grams to about 7 grams or to about 8 grams of protein in the about 4 fluid ounce portion. In certain aspects, four fluid ounces, eight fluid ounces, 12 fluid ounces, 16 fluid ounces, 20 fluid ounces, 24 fluid ounces, 28 fluid ounces, 32 fluid ounces, 36 fluid ounces, 40 fluid ounces, 44 fluid ounces, 48 fluid ounces, 52 fluid ounces, 56 fluid ounces or 60 fluid ounces of clear high protein beverage composition is consumed per day.

According to another aspect, a clear high protein nutritional beverage as described herein is provided in about 6-10 fluid ounce portions. According to one aspect, an individual consumes several 6-10 fluid ounce portions at various times during the waking hours to meet an average daily requirement of protein. Accordingly, a method of providing protein to an individual includes the individual ingesting at various times during waking hours between about 1, 2, 3, 4 or more eight fluid ounce portions of a clear high protein beverage composition having between about 6 grams to about 8 grams of protein in the about 8 fluid ounce portion. In certain aspects, eight fluid ounces, 16 fluid ounces, 24 fluid ounces, 32 fluid ounces, 40 fluid ounces, 48 fluid ounces, 56 fluid ounces or 60 fluid ounces or more of clear high protein beverage composition is consumed per day.

According to another aspect, a clear high protein water beverage (e.g., a Strong Water) is provided. The beverage may include water, between about 2% and about 5% by weight protein; and an optional flavorant. The water beverage may have a protein content of at least about 5 grams of protein, at least about 6 grams of protein or at least about 7 grams of protein per about 8 fluid ounce serving, or have a protein content of about 7 grams of protein per about 8 fluid ounce serving. The beverage protein may have a protein digestibility corrected amino acid score of at least about 0.9 or of about 1.0. The beverage may have a sweetness of less than about 6° Brix. The beverage may further include lactose. The beverage may be substantially lactose-free. The beverage may be sweetened or unsweetened. The beverage may optionally include a colorant.

According to another aspect, a high protein water beverage (e.g., a Strong Water) is provided. The high protein water beverage may include water, between about 2% and about 5% by weight whey protein isolate, and an optional flavorant and may have a sweetness of less than about 6° Brix. The water beverage may have a protein content of at least about 5 grams of protein, at least about 6 grams of protein or at least about 7 grams of protein per about 8 fluid ounce serving, or have a protein content of about 7 grams of protein per about 8 fluid ounce serving. The beverage protein may have a protein digestibility corrected amino acid score of at least about 0.9 or of about 1.0. The beverage may further include lactose. The beverage may be substantially lactose-free. The beverage may be sweetened or unsweetened. The beverage may optionally include a colorant.

According to another aspect, a high protein water beverage (e.g., a Strong Water) is provided. The high protein water beverage may include water, between about 2% and about 4% by weight whey protein isolate, one or more L-amino acids, and an optional flavorant and may have a sweetness of less than about 6° Brix. The water beverage may have a protein content of at least about 5 grams of protein, at least about 6 grams of protein or at least about 7 grams of protein per about 8 fluid ounce serving, or have a protein content of about 7 grams of protein per about 8 fluid ounce serving. The beverage protein may have a protein digestibility corrected amino acid score of at least about 0.9 or of about 1.0. The beverage may further include lactose. The beverage may be substantially lactose-free. The beverage may be sweetened or unsweetened. The beverage may optionally include a colorant.

According to another aspect, a method for making a clear high protein water beverage (e.g., a Strong Water) is provided. The method may include the steps of combining, in any order, water, between about 2% and about 5% by weight protein, and an optional flavorant. The water beverage may have a protein content of at least about 5 grams of protein, at least about 6 grams of protein or at least about 7 grams of protein per about 8 fluid ounce serving, or have a protein content of about 7 grams of protein per about 8 fluid ounce serving. The beverage protein may have a protein digestibility corrected amino acid score of at least about 0.9 or of about 1.0. The beverage may have a sweetness of less than about 6° Brix. The beverage may further include lactose. The beverage may be substantially lactose-free. The beverage may be sweetened or unsweetened. The beverage may optionally include a colorant.

According to another aspect, a method for making a high protein water beverage (e.g., a Strong Water) is provided. The method may include the steps of combining, in any order, water, between about 2% and about 5% by weight whey protein isolate, and an optional flavorant. The water beverage may have a protein content of at least about 5 grams of protein, at least about 6 grams of protein or at least about 7 grams of protein per about 8 fluid ounce serving, or have a protein content of about 7 grams of protein per about 8 fluid ounce serving. The beverage protein may have a protein digestibility corrected amino acid score of at least about 0.9 or of about 1.0. The beverage may have a sweetness of less than about 6° Brix. The beverage may further include lactose. The beverage may be substantially lactose-free. The beverage may be sweetened or unsweetened. The beverage may optionally include a colorant.

It will be appreciated by those skilled in the art, given the benefit of the following description of certain exemplary embodiments of the high protein beverages and other high protein beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

The invention is also described by way of the following clauses:
1. A clear high protein beverage comprising:
   water;
   between about 4% and about 8% by weight protein; and
   a flavorant.
2. The clear high protein beverage of clause 1, having a turbidity of less than 10 nephelometric units.
3. The clear high protein beverage of clause 1, wherein the protein comprises one or both of alpha-lactalbumin and hydrolyzed collagen.
4. The clear high protein beverage of clause 3, wherein the alpha-lactalbumin and the hydrolyzed collagen are present in a ratio of between about 60:40 to about 70:30 alpha-lactalbumin:hydrolyzed collagen.
5. The clear high protein beverage of clause 1, wherein the protein is alpha-lactalbumin.
6. The clear high protein beverage of clause 1, wherein the protein comprises one or both of whey protein hydrolysate and collagen.
7. The clear high protein beverage of clause 6, wherein the whey protein hydrolysate and the collagen are present in a ratio of between about 95:5 to about 85:15 whey protein hydrolysate:collagen.
8. The clear high protein beverage of clause 1, wherein the flavorant is selected from one or more fruit flavors and botanical flavors.
9. The clear high protein beverage of clause 1, wherein the protein has a protein digestibility corrected amino acid score of at least about 0.9.
10. The clear high protein beverage of clause 1, wherein the protein has a protein digestibility corrected amino acid score of about 1.0.
11. The clear high protein beverage of clause 1, having a protein content of at least about 5 grams of protein per 4 fluid ounce serving.
12. The clear high protein beverage of clause 1, having a protein content of about 7 grams of protein per 4 fluid ounce serving.
13. The clear high protein beverage of clause 1, having a sweetness of less than about 6° Brix.
14. The clear high protein beverage of clause 1, further comprising lactose.
15. The clear high protein beverage of clause 1, wherein the clear high protein beverage is substantially lactose-free.
16. A clear high protein beverage comprising:
   water; and
   between about 4% and about 8% by weight whey protein isolate and hydrolyzed collagen, wherein the high protein beverage has a sweetness of less than about 6° Brix.
17. The clear high protein beverage of clause 16, wherein the whey protein isolate is alpha-lactalbumin.
18. The clear high protein beverage of clause 16, wherein the protein has a protein digestibility corrected amino acid score of at least about 0.9.
19. The clear high protein beverage of clause 16, wherein the protein has a protein digestibility corrected amino acid score of about 1.0.
20. The clear high protein beverage of clause 16, having a protein content of at least about 5 grams of protein per 4 fluid ounce serving.
21. The clear high protein beverage of clause 16, having a protein content of about 7 grams protein of per 4 fluid ounce serving.
22. A method for making a clear high protein beverage comprising combining, in any order:
   water;
   between about 4% and about 8% by weight protein; and
   a flavorant.
23. A method for making a clear high protein beverage comprising combining, in any order:
   water; and
   between about 4% and about 8% by weight whey protein isolate and hydrolyzed collagen, wherein the high protein beverage has a sweetness of less than about 6° Brix.
24. The clear high protein beverage of clause 1, wherein the clear high protein beverage is unsweetened
25. A clear high protein water beverage comprising:
   water;
   between about 4% and about 8% by weight protein; and
   an optional flavorant.
26. The clear high protein water beverage of clause 25, having a protein content of at least about 5 grams of protein per 8 fluid ounce serving.
27. The clear high protein water beverage of clause 25, having a protein content of about 7 grams of protein per 8 fluid ounce serving.
28. The clear high protein water beverage of clause 25, further comprising a sweetener.
29. The clear high protein water beverage of clause 25, wherein the clear high protein water beverage is unsweetened.
30. A clear high protein water beverage comprising:
   water;
   between about 4% and about 8% by weight whey protein isolate, wherein the high protein water beverage has a sweetness of less than about 6° Brix; and
   an optional flavorant.
31. The clear high protein water beverage of clause 30, having a protein content of at least about 5 grams of protein per 8 fluid ounce serving.
32. The clear high protein water beverage of clause 30, having a protein content of about 7 grams of protein per 8 fluid ounce serving.
33. The clear high protein water beverage of clause 30, further comprising a sweetener.
34. The clear high protein water beverage of clause 30, wherein the clear high protein beverage is unsweetened.
35. A method for making a clear high protein water beverage comprising combining, in any order:
   water;
   between about 5% and about 8% by weight protein; and
   an optional flavorant.
36. A method for making a clear high protein water beverage comprising combining, in any order:
   water;
   an optional flavorant; and
   between about 5% and about 8% by weight whey protein isolate, wherein the clear high protein water beverage has a sweetness of less than about 6° Brix.
37. A method for making a clear, unsweetened, high protein water beverage comprising combining, in any order:
   water;
   between about 5% and about 8% by weight whey protein isolate; and
   an optional flavorant.
38. A clear high protein water beverage comprising:
   water;
   between about 2% and about 4% by weight whey protein isolate;
   one or more L-amino acids; and
   an optional flavorant, wherein the clear high protein water beverage has a sweetness of less than about 6° Brix.
39. A clear high protein beverage comprising:
   water; and
   between about 4% and about 8% by weight whey protein isolate, wherein the high protein beverage has a sweetness of less than about 6° Brix.
40. The clear high protein beverage of clause 39, wherein the whey protein isolate is alpha-lactalbumin.
41. The clear high protein beverage of clause 39, wherein the protein has a protein digestibility corrected amino acid score of at least about 0.9.
42. The clear high protein beverage of clause 39, wherein the protein has a protein digestibility corrected amino acid score of about 1.0.
43. The clear high protein beverage of clause 39, having a protein content of at least about 5 grams of protein per 4 fluid ounce serving.
44. The clear high protein beverage of clause 39, having a protein content of about 7 grams protein of per 4 fluid ounce serving.

### DETAILED DESCRIPTION

It should be understood that high protein beverage compositions and other high protein beverage products in accordance with this disclosure may have any of numerous different specific formulations or constitutions. The formulation of a composition in accordance with this disclosure can vary to a certain extent, depending upon such factors as the product's intended market segment, its desired nutritional characteristics, flavor profile and the like. For example, it will generally be an option to add further ingredients to the formulation of a particular embodiment, including any of the formulations described below. Additional (i.e., more and/or other) sweeteners, flavorings, vitamins, colorants, fruit products, tastents, masking agents and the like, and/or flavor enhancers typically can be added to any such formulations to vary the taste, mouthfeel, nutritional characteristics, etc. Based on the guidance provided herein, formulating such other products will be well within the ability of one skilled in the art of formulating food products; such products are also covered by the scope of this invention.

Sweeteners, flavorings, electrolytes, vitamins, functional ingredients, fruit juices or other fruit products, tastents, masking agents and the like, flavor enhancers, and/or carbonation typically can be added to any high protein beverage formulation in accordance with this disclosure, to vary the taste, mouthfeel, nutritional characteristics, etc. In general, a high protein beverage in accordance with this disclosure typically comprises at least water and protein and, optionally, sweetener, flavorant, colorant and/or acidulant. Exemplary flavorings which may be suitable for at least certain formulations in accordance with this disclosure include coffee flavoring, jasmine tea flavoring, berry (e.g., pomegranate-blueberry, mixed berry, etc.) flavoring, citrus (e.g., lemon, lemon-grapefruit, etc.) flavoring, fruit punch flavoring, spice (e.g., ginger) flavoring and others. Certain formulations will have no added flavoring. Preservatives can be added if desired, depending upon the other ingredients, production technique, desired shelf life, etc. Optionally, caffeine can be added. Additional and alternative suitable ingredients will be recognized by those skilled in the art given the benefit of this disclosure.

The high protein beverage products disclosed here include nutrition beverages, i.e., ready to drink liquid formulations, high protein beverage concentrates and the like. High protein beverages include, e.g., frozen ready-to-drink beverages, coffee beverages (e.g., green coffee and/or roasted coffee), tea beverages, dairy beverages, powdered beverages, liquid concentrates, Strong Water compositions (e.g., high protein waters), flavored waters, enhanced waters, fruit juice and fruit juice-flavored beverages. The terms "beverage concentrate" and "syrup" are used interchangeably throughout this disclosure. At least certain exemplary embodiments of the high protein beverage concentrates contemplated are prepared with an initial volume of water to which the additional ingredients are added. Full strength high protein beverage compositions can be formed from the high protein beverage concentrate by adding further volumes of water to the concentrate such that the concentrate is diluted to a full strength high protein beverage. Typically, for example, full strength high protein beverages can be prepared from the concentrates by combining approximately 1 part concentrate with between approximately 3 to approximately 7 parts water. In certain exemplary embodiments the full strength high protein beverage is prepared by combining 1 part concentrate with 5 parts water. In certain exemplary embodiments the additional water used to form the full strength high protein beverages is carbonated water. In certain other embodiments, a full strength high protein beverage is directly prepared without the formation of a concentrate and subsequent dilution.

Those of ordinary skill in the art will understand that, for convenience, some ingredients are described here in certain cases by reference to the original form of the ingredient in which it is used in formulating or producing the high protein beverage product. Such original form of the ingredient may differ from the form in which the ingredient is found in the finished high protein beverage product. Thus, for example, certain exemplary embodiments of the high protein beverage products according to this disclosure would typically be substantially homogenously dissolved and dispersed in the high protein beverage. Likewise, other ingredients identified as a solid, concentrate (e.g., juice concentrate), etc. would typically be homogenously dispersed throughout the high protein beverage or throughout the high protein beverage concentrate, rather than remaining in their original form. Thus, reference to the form of an ingredient of a high protein beverage product formulation should not be taken as a limitation on the form of the ingredient in the high protein beverage product, but rather as a convenient means of describing the ingredient as an isolated component of the product formulation.

Water is a basic ingredient in the high protein beverages disclosed here, typically being the vehicle or primary liquid portion in which the remaining ingredients are dissolved, emulsified, suspended or dispersed. Purified water can be used in the manufacture of certain embodiments of the high protein beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the high protein beverage. In certain embodiments, water is present at a level of from about 80% to about 99.9%, from about 89% to about 99%, from about 88% to about 98%, or from about 87% to about 97% by weight of the high protein beverage, or at a level of about 80%, 81 %, 82%, 83%, 84%, 85%, 86%, 87%, 88%, 89%, 90%, 91%, 92%, 93%, 94%, 95%, 96%, 97%, 98% or about 99% by weight of the high protein beverage, or any ranges or single values within these ranges.

In at least certain exemplary embodiments the water used in high protein beverages and concentrates disclosed here is "treated water," which refers to water that has been treated to reduce the total dissolved solids of the water prior to optional supplementation, e.g., with calcium as disclosed in U.S. Patent No. 7,052,725. Methods of producing treated water are known to those of ordinary skill in the art and include deionization, distillation, filtration and reverse osmosis ("r-o"), among others. The terms "treated water," "purified water," "demineralized water," "distilled water," and "r-o water" are understood to be generally synonymous in this discussion, referring to water from which substantially all mineral content has been removed, typically containing no more than about 500 ppm total dissolved solids, e.g., 250 ppm total dissolved solids.

In certain embodiments of the present invention, a nutrition beverage composition is provided which is clear. As used herein, "clear" refers to optical clarity. In certain aspects, a clear high protein beverage is one that is as clear as treated water. In one embodiment of the present invention, the high protein beverage concentrate and/or the finished high protein beverage are capable of being substantially clear, as evidenced by a reading by a turbidimeter of around 1 NTU (nephelometric turbidity units) and not more than 3 NTU. In this aspect of the present invention, the high protein beverage mixture is substantially clear, but for any turbidity that may exist as a result of added components such as clouding agents and/or coloring. In other embodiments, the turbidity of the high protein beverage may be in the range of about 5 to 10 NTU, or less than 10 NTU, less than 9 NTU, less than 8 NTU, less than 7 NTU, less than 6 NTU, less than 5 NTU or less than 4 NTU, and thus may appear slightly hazy or very slightly hazy. In certain other embodiments of the invention, the high protein beverage composition has a turbidity of less than about 10 NTU, 20 NTU, or 30 NTU and is transparent. Higher NTU values of such compositions may be increased by any of the ingredients of the high protein beverage composition, such as but not limited to protein, flavorants, colorants, clouding agents, flavor emulsions, and juices.

In certain embodiments of the present invention, a nutrition beverage composition is provided which has reduced sweetness. As used herein, the term "reduced sweetness" refers to a nutrition beverage composition having a sweetness less than that of nutrition beverages compositions known in the art. In certain exemplary embodiments, a reduced sweetness beverage has a sweetness of less than about 10° Brix, less than about 9° Brix, less than about 8° Brix, less than about 7° Brix, less than about 6° Brix, less than about 5° Brix, less than about 4° Brix or less than about 3° Brix, or having a sweetness of about 2° Brix, about 3° Brix, about 3.4° Brix, about 4° Brix, about 4.7° Brix, about 5° Brix, about 6° Brix, about 7° Brix, about 7.4° Brix, about 8° Brix, about 9° Brix or about 10° Brix, or having a sweetness range of between about 0.5° Brix and about 10° Brix, between about 1° Brix and about 9° Brix, between about 1.5° Brix and about 8° Brix, between about 2° Brix and about 7° Brix, between about 2.5° Brix and about 6° Brix or between about 3° Brix and about 5° Brix, or any ratio ranges or single ratios within these ranges.

In certain embodiments of the present invention, a nutrition beverage composition is provided which includes a high concentration of protein (e.g., protein, peptide, polypeptide, amino acids, and/or any combination of these). The total amount of protein (e.g., protein, peptide, polypeptide, amino acids, and/or any combination of these) may be between about 2% by weight and about 15% by weight, or between about 2% and about 12% by weight, or between about 3% and about 10% by weight, or between about 4% and about 8% by weight, or between about 5% and about 7% by weight, or between about 6.4% to 6.5%, or about 6.4% protein by weight, or greater than 3% by weight, greater than 4% by weight, greater than 5% by weight, or greater than 6% by weight of the high protein beverage composition, or any percentage ranges or specific percentages within these ranges.

In certain embodiments, protein (e.g., protein, peptide, polypeptide, amino acids, and/or any combination of these) is provided by one or any combination of whey protein isolate (e.g., alpha-lactalbumin (ALA)), whey protein (e.g., hydrolyzed), collagen (e.g., hydrolyzed), and individual amino acids (e.g., one or any combination of cysteine, valine, phenylalanine, proline, methionine, isoleucine, leucine, aspartic acid, glutamic acid, lysine, arginine, serine, threonine, tyrosine, histidine, cysteine, asparagine, glutamine, tryptophan, and glycine. In exemplary embodiments, L-form amino acids are used. In other embodiments, the protein may be provided by any other protein sources known in the art.

In certain embodiments, whey protein isolate (e.g., ALA) and collagen (e.g., hydrolyzed collagen) are present in the composition in a weight ratio of between about 20:80 and 100:0, between about 30:70 and 90:10, between about 40:60 and 85:15, between about 50:50 and about 80:20, between about 55:45 and about 75:25 or between about 60:40 and about 70:30, or at a ratio of about 20:80, about 27:73, about 30:70, about 50:50, about 55:45, about 52:48, about 60:40, about 64:36, about 65:35, about 70:30, about 72:28, about 75:25, about 80:20, about 85:15, about 90:10, about 95:5 or about 100:0 whey protein isolate to collagen, or any ratio ranges or single ratios within these ranges. In alternate embodiments, whey protein (e.g., hydrolyzed whey protein) and collagen (e.g., hydrolyzed collagen) are present in the composition in a weight ratio of between about 100:0 and about 50:50, between about 95:5 and about 65:35, between about 90:10 and about 70:30, between about 85:15 and about 75:25 or between about 82:18 and about 78:22, or at a ratio of about 99:1, about 97:3, about 95:5, about 92:8, about 90:10, about 88:12, about 85:15, about 83:17, about 80:20, about 70:30, about 60:40 or about 50:50 whey protein isolate to collagen, or any ratio ranges or single ratios within these ranges.

In certain embodiments of the present invention, a nutrition beverage composition is provided which includes a high concentration of protein (e.g., protein, peptide, polypeptide, amino acids and/or any combination of these) and/or one or more dairy products and/or one or more dairy product components. As used herein, a "dairy product" refers to a liquid produced by the mammary gland of a mammal, e.g., milk and/or colostrum, as well as compositions made from milk and/or colostrum (e.g., dried milk powder, evaporated milk, condensed milk, whole milk, 2% milk, 1% milk, nonfat milk, cream (e.g., light, heavy, whipping, half-and-half), ice cream, iced milk, butter, cheese and the like).

As used herein, a "dairy product component" refers to milk fractions (e.g., whey fraction, casein fraction, and the like) or colostrum fractions (e.g., an antibody fraction), as well as individual components present in milk and/or colostrum. Such components include, but are not limited to, lipids, proteins (e.g., caseins, whey (e.g., lactoglobulin), antibodies and the like), minerals and salts (phosphates, calcium, magnesium, sodium, potassium, citrate, chlorine and the like), vitamins (A, B6, B12, C, D, K, E, thiamine, niacin, biotin, riboflavin, folates, pantothenic acid and the like), carbohydrates (e.g., lactose), enzymes and the like.

In certain embodiments of the present invention, a nutrition beverage composition is provided which includes a high concentration of protein (e.g., protein, peptide, polypeptide, amino acids and/or any combination of these) and one or more dairy products and/or one or more dairy product components. The total amount of one or more dairy products and/or one or more dairy product components may be between about 0.01% by weight and about 5% by weight, or between about 0.05% and about 4.5% by weight, or between about 0.1% and about 4% by weight, or between about 0.5% and about 3.5% by weight, or between about 1% and about 3% by weight of the high protein beverage, or less than 50% by weight, less than 40% by weight, less than 30% by weight, less than 25% by weight, less than 20% by weight, less than 15% by weight, less than 10% by weight, less than 9% by weight, less than 8% by weight, less than 7% by weight, less than 6% by weight, less than 5% by weight, less than 4% by weight, less than 3% by weight, less than 2% by weight, less than 1% by weight, less than 0.5% by weight, less than 0.25% by weight, less than 0.05% by weight, 0.01% or less by weight of the high protein beverage, or any percentage ranges or specific percentages within these ranges. In certain embodiments, one or more dairy products and/or one or more dairy product components is provided by one or any combination of lactose, whey fraction, dried milk powder and liquid milk (e.g., evaporated milk, condensed milk, whole milk, 2% milk, 1% milk, nonfat milk).

In embodiments of the present invention a nutrition beverage composition is provided which includes protein (e.g., protein, peptide, polypeptide, amino acids, and/or any combination of these) between about 1 gram to about 14 grams, about 2 grams to about 12 grams, about 3 grams to about 10 grams, or between about 5 grams and about 8 grams per 4 ounce serving, or greater than 1 gram, 2 grams, 3 grams, 4 grams, 5 grams or 6 grams or 7 grams or 8 grams per 4 ounce serving, or any ratio ranges or single ratios within these ranges. In other embodiments of the present invention a nutrition beverage composition is provided which includes protein (e.g., protein, peptide, polypeptide, amino acids and/or any combination of these) between about 1 gram to about 14 grams, about 2 grams to about 12 grams, about 3 grams to about 10 grams, or between about 5 grams and about 8 grams per 8 ounce serving, or greater than 1 gram, 2 grams, 3 grams, 4 grams, 5 grams or 6 grams or 7 grams or 8 grams per 8 ounce serving, or any ratio ranges or single ratios within these ranges.

In certain embodiments of the present invention, a nutrition beverage composition is provided which includes fiber (e.g., soluble, insoluble or a combination thereof). The total amount of fiber (e.g., soluble, insoluble or a combination thereof) may be between about 0.01% by weight and about 15% by weight, or between about 0.1% and about 12% by weight, or between about 1.0% and about 10% by weight, or between about 2.0% and about 8% by weight, or between about 3% and about 7% by weight, or between about 4% to 6%, by weight of the high protein beverage composition, or any percentage ranges or specific percentages within these ranges.

In certain embodiments of the present invention, a nutrition beverage composition is provided which includes fiber (e.g., soluble, insoluble or a combination thereof) between about 0.05 gram to about 7 grams, about 0.5 gram to about 6 grams, about 1 gram to about 5 grams, or between about 1.5 grams and about 4 grams per 4 ounce serving, or any ratio ranges or single ratios within these ranges. In other embodiments of the present invention a nutrition beverage composition is provided which fiber (e.g., soluble, insoluble or a combination thereof) between about 0.1 gram to about 14 grams, about 1 gram to about 12 grams, about 2 grams to about 10 grams, or between about 3 grams and about 8 grams per 8 ounce serving, or any ratio ranges or single ratios within these ranges.

As used herein, fiber includes, but is not limited to, polysaccharides, oligosaccharides, lignin and the like. Exemplary fibers include, but are limited to, polydextrose, polyol, plant waxes, psyllium, resistant starches, wheat dextrin, resistant dextrins, Fibersol, arabinogalactan, inulin, oligofructose, chitosan, chitin, xanthan, pectin, cellulose, hemicellulose, konjac, gum arabic, modified starch, soy fiber, inulin, inulose, hydrolyzed guar, vegetable gum fibers (e.g., guar gum, acacia Senegal gum and the like), mucilage, beta-glucan, carrageenan, locust bean gum, alginate, polyglycol alginate, and the like.

In certain embodiments, a nutrition beverage composition comprises at least 2.5 grams of dietary fiber per 8 ounce serving, which is equal to a "good source of fiber: as defined by the United States Food and Drug Administration ("FDA") (*see* the Code of Federal Regulations Title 21). Similarly, in certain exemplary embodiments, a nutrition beverage composition comprises at least 5 grams of fiber per 8 ounce serving, which is equal to an "excellent source of fiber" as defined by the FDA. For example, a nutrition beverage composition optionally comprises between about 6% and about 15% by weight total fiber. In certain exemplary embodiments, the fiber of the certain exemplary embodiments, a nutrition beverage composition comprises soluble fiber, insoluble fiber or both soluble fiber and insoluble fiber.

In certain embodiments, a serving in fluid ounces is between about 1 ounce and about 7 ounces, between about 2 ounces and about 6 ounces, between about 3 ounces and about 5 ounces, between about 4 ounces and about 12 ounces, between about 5 ounces and about 11 ounces, between about 6 ounces and about 10 ounces, between about 7 ounces and about 9 ounces, between about 2 ounces and about 10 ounces, between about 3 ounces and about 9 ounces or between about 4 ounces and about 8 ounces, or less than about 12 ounces, less than about 11 ounces, less than about 10 ounces, less than about 9 ounces, less than about 8 ounces, less than about 7 ounces, less than about 6 ounces, less than about 5 ounces, less than about 4 ounces or less than about 3 ounces, or any ratio ranges or single ratios within these ranges. In certain embodiments, a serving in fluid ounces is between about 1 ounce and about 16 ounces, between about 2 ounces and about 15 ounces, between about 3 ounces and about 14 ounces, between about 4 ounces and about 13 ounces, between about 5 ounces and about 12 ounces, between about 6 ounces and about 11 ounces or between about 7 ounces and about 10 ounces, or less than about 16 ounces, less than about 15 ounces, less than about 14 ounces, less than about 13 ounces, less than about 12 ounces, less than about 11 ounces, less than about 10 ounces or less than about 9 ounces, or any ratio ranges or single ratios within these ranges. According to certain aspects, a serving in fluid ounces can be 1 ounce, 2 ounces, 3 ounces, 4 ounces, 5 ounces, 6 ounces, 7 ounces, 8 ounces, 9 ounces or 10 ounces or greater.

In certain aspects, a high protein beverage composition is provided in a ready-to-drink container containing a single hydration unit comprising four fluid ounces. In other aspects, a high protein beverage composition is provided in a ready-to-drink container containing multiple four fluid ounce hydration units, i.e., two hydration units (i.e., eight fluid ounces total), three hydration units (i.e., 12 fluid ounces total), four hydration units (i.e., 16 fluid ounces total), five hydration units (i.e., 20 fluid ounces total), six hydration units (i.e., 24 fluid ounces total), seven hydration units (i.e., 28 fluid ounces total), eight hydration units (i.e., 32 fluid ounces total), nine hydration units (i.e., 36 fluid ounces total), ten hydration units (i.e., 40 fluid ounces total), 11 hydration units (i.e., 44 fluid ounces total), 12 hydration units (i.e., 48 fluid ounces total), 13 hydration units (i.e., 52 fluid ounces total), 14 hydration units (i.e., 56 fluid ounces total), 15 hydration units (i.e., 60 fluid ounces total), or more hydration units. In certain exemplary embodiments, containers containing one or more hydration units include one or more optional 4 fluid ounce markings on the container indicating the number of hydration units in the container. According to this aspect, an individual may select the desired volume to be ingested based on the number of markings on the container and/or the volume size of the container. Alternatively, a 4 fluid ounce vessel may be used by the individual to meter out 4 fluid ounce units from the container to be ingested.

In certain aspects, a high protein beverage composition is provided in a ready-to-drink container containing a single protein unit comprising seven grams of protein (e.g., protein, peptide, polypeptide, amino acids and/or any combination of these). In other aspects, a high protein beverage composition is provided in a ready-to-drink container containing multiple protein units, each comprising seven grams of protein (e.g., protein, peptide, polypeptide, amino acids and/or any combination of these), i.e., two protein units (i.e., 14 grams of protein), three protein units (i.e., 21 grams of protein, peptide, polypeptide, amino acids and/or any combination of these total), four protein units (i.e., 28 grams of protein, peptide, polypeptide, amino acids and/or any combination of these total), five protein units (i.e., 35 grams of protein, peptide, polypeptide, amino acids and/or any combination of these total), six protein units (i.e., 42 grams of protein, peptide, polypeptide, amino acids and/or any combination of these total), seven protein units (i.e., 49 grams of protein, peptide, polypeptide, amino acids and/or any combination of these total), eight protein units (i.e., 56 grams of protein, peptide, polypeptide, amino acids and/or any combination of these total), nine protein units (i.e., 63 grams of protein, peptide, polypeptide, amino acids and/or any combination of these total), ten protein units (i.e., 70 grams of protein, peptide, polypeptide, amino acids and/or any combination of these total), 11 protein units (i.e., 77 grams of protein, peptide, polypeptide, amino acids and/or any combination of these total), 12 protein units (i.e., 84 grams of protein, peptide, polypeptide, amino acids and/or any combination of these total), 13 protein units (i.e., 91 grams of protein, peptide, polypeptide, amino acids and/or any combination of these total), 14 protein units (i.e., 98 grams of protein, peptide, polypeptide, amino acids and/or any combination of these total), 15 protein units (i.e., 105 grams of protein, peptide, polypeptide, amino acids and/or any combination of these total), or more protein units. In certain exemplary embodiments, containers containing one or more protein units include one or more optional 7 gram markings on the container indicating the number of protein units in the container. According to this aspect, an individual may select the desired number of protein units to be ingested based on the number of markings on the container and/or the volume size of the container. Alternatively, a vessel having a volume corresponding to 7 grams of protein may be used by the individual to meter out an appropriate fluid volume containing a 7 gram unit of protein from the container to be ingested.

In certain embodiments of the present invention, a nutrition beverage composition is provided which includes proteins having a protein digestibility corrected amino acid score (PDCAAS) at or near 1.00. In certain embodiments, a protein is provided having a PDCAAS greater than about 0.80, about 0.85, about 0.90, about 0.91, about 0.92, about 0.93, about 0.94, about 0.95, about 0.96, about 0.97, about 0.98, or about 0.99 or any ratio ranges or single ratios within these ranges. In certain embodiments a protein is provided having a PDCAAS between about 0.80 and about 1.00, between about 0.85 and about 0.99, between about 0.90 and about 0.98, between about 0.91 and about 0.97, between about 0.92 and about 0.96, or between about 0.93 and about 0.95, or any ratio ranges or single ratios within these ranges. In certain embodiments, a nutrition beverage composition optionally contains one or more amino acids added to increase the PDCAAS score of the nutrition beverage composition, i.e., to achieve a nutrition beverage composition having a PDCAAS greater than about 0.80, about 0.85, about 0.90, about 0.91, about 0.92, about 0.93, about 0.94, about 0.95, about 0.96, about 0.97, about 0.98, or about 0.99 or any ratio ranges or single ratios within these ranges.

The formula for calculating the PDCAAS percentage is (mg of limiting amino acid in 1 g of test protein / mg of same amino acid in 1 g of reference protein) x fecal true digestibility percentage (Schaafsma (2000) J. Nutrition 130:1865S). A PDCAAS value of 1 is the highest, and 0 the lowest. Casein (milk protein), egg white, soy protein and whey (milk protein) each have a PDCAAS of 1.00; beef has a PDCAAS of 0.92; soybeans have a PDCAAS of 0.91; chickpeas have a PDCAAS of 0.78; fruits, on average, have a PDCAAS of 0.76; vegetables, on average, have a PDCAAS of 0.73; legumes, on average, have a PDCAAS of 0.70; cereals, on average, have a PDCAAS of 0.59; and whole wheat has a PDCAAS of 0.42 (Schaafsma (2000); Hoffmanand and Falvo (2004) J. Sports Science and Medicine 3:118).

In certain embodiments of the present invention, a nutrition beverage composition is provided which includes the addition of one or more proteins, peptides, polypeptides and/or amino acids having a high degree of purity, e.g., stock compositions containing no or low amounts of substances in addition to the one or more proteins, peptides, polypeptides and/or amino acids present in the stock composition. In certain embodiments, one or more proteins, peptides, polypeptides and/or amino acids are provided having at least about 60% purity, at least about 65% purity, at least about 70% purity, at least about 75% purity, at least about 80% purity, at least about 85% purity, at least about 90% purity, at least about 91% purity, at least about 92% purity, at least about 93% purity, at least about 94% purity, at least about 95% purity, at least about 96% purity, at least about 97% purity, at least about 98% purity, at least about 99% purity or about 100% purity.

Hydrolyzed proteins (e.g., milk protein, soy protein, colostrum protein, whey, collagen and the like) are commercially available from a variety of sources. Characteristics of the hydrolyzed protein will depend on various factors, for instance the source of the protein and the method and conditions by which the protein is hydrolyzed. For example, the taste of a particular protein hydrolysate can be significantly affected by the location at which the intact proteins are cleaved into peptides. Protein hydrolysis is generally achieved by reacting the intact protein with specific enzymes under time and temperature conditions to optimize the hydrolysis yield. Often, the resulting protein hydrolysates are filtered to remove free amino acids and large proteins. If hydrophobic amino acids or amino acids comprising sulfur are located at the ends of the hydrolyzed protein peptides, they will typically exhibit a more bitter flavor than peptides in which hydrophobic and sulfur-containing amino acids are located away from the ends of the peptides, such as closer to the middle of the peptides. In certain embodiments, the protein hydrolysates employed in the high protein beverage compositions described herein exhibit a clean taste substantially devoid of bitterness.

Protein isolates can be generated by a variety of methods known to those of ordinary skill in the art. For example, whey protein isolate can be made as follows. Whey can be made from coagulated milk from which cheese has been processed. The fat is removed and it is either processed e.g., by simple drying, or the protein content can be increased by removing lipids and other non-protein materials (Foegeding et al. (2002). Trends in Food Science & Technology 13:151, doi:10.1016/S0924-2244(02)00111-5), or by spray drying after membrane filtration to separate proteins from whey (Tunick (2008) In Whey processing, functionality and health benefits. Ames, Iowa: Blackwell Publishing; IFT Press. pp. 1-13).

Hydrolyzed proteins, protein isolates and are collagens commercially available from a variety of vendors and include, but are not limited to, LACPRODAN® (DI-3076, Arla Foods Ingredients, Viby J, Denmark), GRANDE ULTRA® whey protein isolate (9250, Grande Custom Ingredients Group, Lomira, WI) alpha-lactalbumin (07-G1019, Davisco Foods International, Inc., Eden Prairie, MN), and hydrolyzed collagen and Actinase Plus 1, EAA profile (Gelita AG, Eberbach, Germany). Amino acids are commercially available from a variety of vendors including, but not limited to, DNP International (Santa Fe Springs, CA), Ajinomoto Company, Inc. (Fort Lee, NJ), V.L. Clark Chemical Company (Union MO), and Voigt Global Distribution, Inc. (Lawrence KS)

The high protein beverage products disclosed here optionally contain one or more flavorants or flavor compositions, for example, natural and/or synthetic fruit flavors, botanical flavors, other flavors, and mixtures thereof. In certain aspects, one or more flavorants or flavorant compositions can be used to decrease, ameliorate or mask one or more undesirable taste characteristics (e.g., bitter taste, stringency, unpleasant aftertaste and the like) of a high protein beverage product described herein. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. Also included within the term "fruit flavor" are synthetically prepared flavors made to simulate fruit flavors derived from natural sources. Examples of suitable fruit or berry sources include whole berries and/or fruits or portions thereof, extract, juice, juice concentrates, purees and blends thereof, dried powders, dried juice powders, freeze dried juices, powders and purees and the like. Exemplary fruit flavors include the citrus flavors, e.g., orange, mandarin orange, tangerine, tangelo, pomelo, lemon (e.g., lemon ice), lime (e.g., lime ice) and grapefruit (e.g., grapefruit ice), and such flavors as apple, grape, cherry, and pineapple flavors and the like, fruit punch (e.g., tropical punch) flavors and mixtures thereof

(e.g., lemon-grapefruit, mixed berry, pomegranate-blueberry, etc.. In certain exemplary embodiments the high protein beverage concentrates and high protein beverages comprise a fruit flavor component, e.g., a juice concentrate or juice.

As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include coffee flavors (e.g., café au lait, latte, espresso and the like), tea flavors (e.g., jasmine tea), chocolate (e.g., cacao) and the like, and mixtures thereof. The flavor component can further comprise a blend of various of the above-mentioned flavors. In certain exemplary embodiments of the high protein beverage concentrates and high protein beverages a tea flavor component or a coffee (e.g., green and/or roasted) flavor component is used. The particular amount of the flavor component useful for imparting flavor characteristics to the high protein beverages containing protein disclosed here will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

In certain embodiments, the high protein beverage products disclosed here optionally include one or more flavorants present at a level from about 0.0005% to about 5%, about 0.001% to about 4%, about 0.005% to about 3%, about 0.01% to about 2%, about 0.05% to about 1%, or about 0.1% to about 0.5% by weight of the high protein beverage, or at a level of about 0.001%, 0.0025%, 0.005%, 0.0075%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9% or about 1.0% by weight of the high protein beverage, or any ranges or single values within these ranges.

The high protein beverage products disclosed here can include juices, e.g., fruit, berry and/or vegetable juices. Juices can be employed in the form of a concentrate, extract, puree, single-strength juice, or other suitable forms. The term "juice" as used here includes single-strength fruit, berry, or vegetable juice, as well as extracts, concentrates, purees, milks, and other forms. Multiple different fruit, vegetable and/or berry juices can be combined, optionally along with other flavorings, to generate a high protein beverage having the desired flavor. Examples of suitable juice sources include, but are not limited to, plum, prune, fig, pineapple, peach, banana, apple, pear, guava, apricot, coconut, olive, kiwi, quince, buckthorn, passion fruit, rowan, pomegranate, persimmon, mango, rhubarb, papaya, litchi, lemon, orange, lime, tangerine, mandarin orange, tangelo, pomelo, grapefruit, Barbados cherry (acerola cherry), bearberry, blackberry, blueberry, boysenberry, cherry, choke cherry, cloudberry, cranberry, current, date, dewberry, elderberry, grape, gooseberry, huckleberry, loganberry, olallieberry, mulberry, raisin, plains berry, prairie berry, raspberry, Saskatoon berry, salmonberry, Seabuckthorn berry, sloe berry, strawberry, thimbleberry, Thornberry, wineberry, whortleberry and the like. Numerous additional and alternative juices suitable for use in at least certain exemplary embodiments will be apparent to those skilled in the art given the benefit of this disclosure.

In certain embodiments, the high protein beverage products disclosed here optionally include one or more juices (e.g., one or more of single-strength fruit, berry, or vegetable juice, as well as extracts, concentrates, purees, milks, and other forms) present at a level from about 0.0005% to about 40%, about 0.001% to about 20%, about 0.005% to about 15%, about 0.01% to about 10%, about 0.05% to about 5%, or about 0.1% to about 2.5% by weight of the high protein beverage, or at a level of about 0.001%, 0.0025%, 0.005%, 0.0075%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1.0%, 2.0%, 3.0%, 4.0%, 5.0%, 6.0%, 7.0%, 8.0%, 9.0%, 10 11.0%, 12.0%, 13.0%, 14.0%, 15.0%, 16.0%, 17.0%, 18.0%, 19.0%, 20.0%, 21.0%, 22.0%, 23.0%, 24.0%, 25.0%, 26.0%, 27.0%, 28.0%, 29.0%, 30.0%, 31.0%, 32.0%, 33.0%, 34.0%, 35.0%, 36.0%, 37.0%, 38.0%, 39.0%, or about 40.0%, about by weight of the high protein beverage, or any ranges or single values within these ranges. Typically, juice can be used, if at all, in an amount of from about 0.001% to about 20% by weight.

Certain such juices which are lighter in color can be included in the formulation of certain exemplary embodiments to adjust the flavor and/or increase the juice content of the high protein beverage without darkening the high protein beverage color. Examples of such juices include apple, pear, pineapple, peach, lemon, lime, orange, mandarin orange, tangelo, pomelo, apricot, grapefruit, tangerine, rhubarb, cassis, quince, passion fruit, papaya, mango, guava, litchi, kiwi, mandarin, coconut, and banana. Deflavored and decolored juices can be employed if desired.

Other flavorings suitable for use in at least certain exemplary embodiments of the high protein beverage products disclosed here include, e.g., herb and/or spice flavorings, such as cassia, clove, cinnamon, pepper, ginger (e.g., gingerbread), vanilla spice flavorings, chocolate, cardamom, coriander, root beer, sassafras, ginseng, jasmine, tea (e.g., black, green, oolong of any varietals known in the art) and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art.

The one or more flavorings can be used in the form of an emulsion. A flavoring emulsion can be prepared by mixing some or all of the flavorings together, optionally together with other ingredients of the high protein beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

High protein beverage compositions according to the present invention exhibit a desirable taste profile. As used herein, the term "taste" refers to the flavor of the high protein beverage and includes sweetness, sourness, bitterness, saltiness and umami (e.g., savoriness or meatiness). In certain exemplary embodiments, taste refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, the term "mouthfeel" is intended to refer to a tactile sensation a beverage gives to the mouth (i.e., due to physical and chemical interactions in the mouth). It is evaluated from initial perception on the palate through to swallowing. Mouthfeel modifiers include qualities such as astringency, creaminess, thickness, bubbly characteristics and the like.

The taste profile of a high protein beverage composition may be analyzed by a sensory panel. Sensory panels are well known in the art, and comprise groups of testers who describe products on the basis of selected senses, such as taste, scent, feel, sound, and appearance. Typically, one or more particular attributes of interest are selected and rated by each member of the sensory panel, and the results are generally reported as an average rating.

For example, the high protein beverage compositions according to embodiments of the invention exhibit a bitterness of less than about 3, a tartness of between about 2 and about 6, and an astringency of less than about 3, as determined by a sensory panel using a scale of 0 to 7, wherein 0 corresponds to no detection and wherein 7 corresponds to high detection. According to aspects of the invention, the high protein beverage compositions exhibit a bitterness of less than about 3, or less than about 2, or less than about 1. According to aspects of the invention, the high protein beverage compositions exhibit a tartness of between about 2 and about 6, or between about 2 and about 5, or between about 3 and about 6, or between about 3 and about 5, or less than about 6, about 5, about 4 or about 3. According to aspects of the invention, the high protein beverage compositions exhibit an astringency of less than about 3, or less than about 2, or less than about 1.

In embodiments providing a packaged ready-to-drink high protein beverage, the high protein beverage composition may be pre-mixed with a liquid such as water. In certain embodiments, the ready-to-drink high protein beverage comprises about 80-99 weight percent (wt. %) of liquid of the total weight of the high protein beverage. Unless otherwise specified, all weight percentages are based on the total weight of a ready-to-drink high protein beverage. In further embodiments, the high protein beverage composition can be packaged as an edible composition or concentrate, such as a dry mix (e.g., powder) or a liquid concentrate for later reconstitution with one or more liquids to form a high protein beverage. The concentrated composition may be associated with instructions for preparing the high protein beverage composition. In another embodiment, a high protein beverage concentrate may be packaged as gels, capsules, or tablets which are consumed with liquid. When provided in these forms, the high protein beverage composition may comprise instructions to mix or consume with an amount of liquid which is equal to about 80-99 wt. % of the prepared high protein beverage composition.

In certain embodiments of the high protein beverage products disclosed here, one or more sweeteners are used. In certain embodiments of the high protein beverage products disclosed here, no sweeteners are added. The sweetener(s) used in the high protein beverage products disclosed here are edible consumables suitable for consumption in high protein beverages. By "edible consumables" is meant a food or beverage or an ingredient of a food or beverage for human or animal consumption. The sweetener or sweetening agent is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements. To achieve desired high protein beverage uniformity, texture and taste, standardized liquid sugars as are commonly employed in the high protein beverage industry can be used. Typically such standardized sweeteners are free of traces of non-sugar solids which could adversely affect the flavor, color or consistency of the high protein beverage.

Sweeteners suitable for use in various exemplary embodiments of the high protein beverage products disclosed here include natural and artificial or synthetic sweeteners, including a combination of any of them. Suitable sweeteners and combinations of sweeteners are selected for the desired nutritional characteristics, taste profile for the high protein beverage, mouthfeel and other organoleptic factors.

As used herein, a "full-calorie" high protein beverage formulation is one fully sweetened with a nutritive sweetener. As used herein, "reduced calorie high protein beverage" means a high protein beverage having at least a 25% reduction in calories per 8 oz. serving of high protein beverage as compared to the full calorie version, typically a previously commercialized full-calorie version. As used herein, a "low-calorie high protein beverage" has fewer than 40 calories per 8 oz. serving of high protein beverage (or fewer than about 20 calories per 4 oz. serving). As used herein, "zero-calorie" or "diet" means having less than 5 calories per 8 oz. serving of high protein beverage (or less than about 2.5 calories per 4 oz. serving).

As used herein, a "nutritive sweetener" is a sweetener which generally provides significant caloric content in typical usage amounts, e.g., more than about 5 calories per 8 oz. serving (or more than about 2.5 calories per 4 oz. serving) of high protein beverage. As used herein, a "non-nutritive sweetener" is one which does not provide significant caloric content in typical usage amounts, i.e., is one which imparts less than 5 calories per 8 oz. serving (or less than about 2.5 calories per 4 oz. serving) of high protein beverage to achieve the sweetness equivalent of 10 Brix of sugar.

In at least certain exemplary embodiments of the high protein beverages containing protein disclosed here, the sweetener component can include nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup and/or others as well as synthesized nutritive sweeteners such as, e.g., polydextrose. Such sweeteners are present in at least certain exemplary embodiments in an amount of from about 0.1% to about 20% by weight of the high protein beverage, such as from about 1% to about 4% by weight, depending upon the desired level of sweetness for the high protein beverage. To achieve desired high protein beverage uniformity, texture and taste, in certain exemplary embodiments of the high protein beverage products disclosed here, standardized liquid sugars as are commonly employed in the beverage industry can be used. Typically such standardized sweeteners are free of traces of non-sugar solids which could adversely affect the flavor, color or consistency of the beverage.

In certain embodiments, the high protein beverage products disclosed here optionally include one or more nutritive sweeteners present at a level from about 0.001% to about 10%, about 0.005% to about 9%, about 0.01% to about 8%, about 0.05% to about 7%, about 0.1% to about 6%, about 0.5% to about 5%, or about 1% to about 4% by weight of the high protein beverage, or at a level of about 0.1%, 0.2%, 0.3%, 0.4%, 0.5%, 0.6%, 0.7%, 0.8%, 0.9%, 1%, 2%, 3%, 4%, 5%, 6%, 7%, 8%, 9%, or about 10% by weight of the high protein beverage, or any ranges or single values within these ranges.

As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a high protein beverage sweetened to a level of 10 degrees Brix with sugar. Potent sweeteners include both nutritive (e.g., Lo Han Guo juice concentrate) and non-nutritive sweeteners (e.g., typically, Lo Han Guo powder), rebaudioside A, rebaudioside D, etc. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. In addition, potent sweeteners include both natural potent sweeteners (e.g., steviol glycosides, Lo Han Guo, etc.) and artificial potent sweeteners (e.g., neotame, etc.). However, for natural high protein beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspartame | 200 times as sweet as sugar |
| Saccharin | 300 times as sweet as sugar |
| Neohesperidin dihydrochalcone | 300 times as sweet as sugar |
| Sucralose | 600 times as sweet as sugar |
| Neotame | 8,000 times as sweet as sugar. |

Non-nutritive artificial potent sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame (including but not limited to acesulfame potassium), cyclamate (including but not limited to sodium cyclamate and/or calcium cyclamate), neohesperidin dihydrochalcone, and Sucralose. Alitame may be less desirable for caramel-containing beverages where it has been known to form a precipitate. Other non-nutritive sweeteners suitable for at least certain exemplary embodiments include, for example, sorbitol, mannitol, xylitol, glycyrrhizin, neohesperidin dihydrochalcone, D-tagatose, erythritol, meso-erythritol, malitol, maltose, lactose, fructo-oligosaccharides, Lo Han Guo powder, steviol glycosides, e.g., rebaudiosides such as rebaudioside A, rebaudioside D, stevioside, etc., xylose, arabinose, isomalt, lactitol, maltitol, trehalulose, and ribose, and protein sweeteners such as monatin, thaumatin, monellin, brazzein, L-alanine and glycine related compounds and mixtures of any of them. Lo Han Guo, steviol glycosides, e.g., rebaudiosides such as rebaudioside A, stevioside, etc. and related compounds, as discussed further below, are natural non-nutritive potent sweeteners. It will be within the ability of those skilled in the art, given the benefit of this disclosure, to select suitable non-nutritive sweeteners (e.g., one or combination of non-nutritive sweeteners, either alone or together with nutritive sweetener) for a particular embodiment of the high protein beverage products disclosed here.

Non-nutritive, high potency sweeteners typically are employed at a level of milligrams per fluid ounce of high protein beverage, according to their sweetening power, any applicable regulatory provisions of the country where the high protein beverage is to be marketed, the desired level of sweetness of the high protein beverage, etc. It will be within the ability of those skilled in the art, given the benefit of this disclosure, to select suitable additional or alternative sweeteners for use in various embodiments of the high protein beverage products disclosed here.

In certain embodiments, the high protein beverage products disclosed here optionally include one or more non-nutritive, high potency sweeteners present at a level from about 0.0005% to about 5%, about 0.001% to about 4%, about 0.005% to about 3%, about 0.01% to about 2%, about 0.05% to about 1%, about 0.1% to about 0.5% by weight of the high protein beverage, or at a level of about 0.0005%, 0.001%, 0.0025%, 0.005%, 0.0075%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9% or 1.0% by weight of the high protein beverage, or any ranges or single values within these ranges.

Certain exemplary embodiments of the high protein beverages disclosed here employ steviol glycosides, e.g., rebaudiosides such as rebaudioside A, rebaudioside D, stevioside, etc. or related compounds or mixtures of any of them for sweetening. These compounds can be obtained by extraction or the like from the stevia plant. Stevia (e.g., Stevia rebaudiana bectoni) is a sweet-tasting plant. The leaves contain a complex mixture of natural sweet diterpene glycosides. Steviol glycosides, e.g., rebaudiosides such as rebaudioside A, rebaudioside D, stevioside, etc. are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The following non-sweet constituents also have been identified in the leaves of stevia plants: labdane, diterpene, triterpenes, sterols, flavonoids, volatile oil constituents, pigments, gums and inorganic matter. In at least certain embodiments of the high protein beverage products disclosed herein, non-nutritive sweeteners steviol glycosides, e.g., rebaudiosides such as rebaudioside A, rebaudioside D, stevioside, etc. may be included in ready to drink high protein beverage compositions at a weight percent of about 0.1% to about 10.0%, and preferably between about 0.2% and about 0.75%.

The sweetener Lo Han Guo, which has various different spellings and pronunciations and is abbreviated here in some instances as LHG, can be obtained from fruit of the plant family Cucurbitaceae, tribe Jollifieae, subtribe Thladianthinae, genus Siraitia. LHG often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Lo Han Guo fruit. LHG contains triterpene glycosides or mogrosides, which constituents may be used as LHG sweeteners. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. Lo Han Guo can be used as the juice or juice concentrate, powder, etc. Preferably LHG juice contains at least about 0.1 %, e.g., from 0.1% to about 15%, mogrosides, preferably mogroside V, mogroside IV, (11-oxo-mogroside V), siamenoside and mixtures thereof. LHG can be produced, for example, as discussed in U.S. patent No. 5,411,755. Sweeteners from other fruits, vegetables or plants also may be used as natural or processed sweeteners or sweetness enhancers in at least certain exemplary embodiments of the high protein beverages disclosed here.

Natural embodiments of the high protein beverage products disclosed here are natural in that they do not contain anything artificial or synthetic (including any color additives regardless of source) that would not normally be expected to be in the food. As used herein, therefore, a "natural" high protein beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 C.F.R. § 170.3(o)(24).) are considered incidental additives and may be used if removed appropriately.

Certain embodiments of the high protein beverage products disclosed here contain one or more acids. Such acidulant can serve any of one or more functions, including, for example, lending tartness to the taste of the high protein beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the high protein beverages containing protein disclosed here include phosphoric acid, citric acid, malic acid, tartaric acid, lactic acid, formic acid, ascorbic acid, gluconic acid, succinic acid, maleic acid and adipic acid and mixtures of any of them.

Typically, for example, the one or more acids of the acidulant are used in amount, collectively, of from about 0.01% to about 1.0% by weight of the high protein beverage, e.g., from about 0.05% to about 0.5% by weight of the high protein beverage, such as 0.1% to 0.25% by weight of the high protein beverage, depending upon the acidulant used, desired pH, other ingredients used, etc. In certain embodiments, the high protein beverage products disclosed here optionally include an acidulant present at a level from about 0.001% to about 10%, about 0.005% to about 9%, about 0.01% to about 8%, about 0.05% to about 7%, about 0.1% to about 6%, about 0.5% to about 5%, or about 1% to about 4% by weight of the high protein beverage, or at a level of about 0.1%, 0.15%, 0.2%, 0.25%, 0.3%, 0.35%, 0.4%, 0.45%, 0.5%, 0.55%, 0.6%, 0.65%, 0.7%, 0.75%, 0.8%, 0.85%, 0.9%, 0.95% or about 1% by weight of the high protein beverage, or any ranges or single values within these ranges.

Certain embodiments of the high protein beverage products disclosed here contain one or more buffers. Such buffer can serve any of one or more functions, including, for example, maintaining acidity and preserving color and/or taste. Suitable buffers are known and will be apparent to those skilled in the art given the benefit of this disclosure. Exemplary buffers suitable for use in some or all embodiments of the high protein beverages containing protein disclosed here include sodium citrate, potassium citrate, potassium citrate, monopotassium phosphate, potassium tartrate, sodium chloride and mixtures of any of them. In certain embodiments, the high protein beverage products disclosed here optionally include one or more buffers present at a level from about 0.001 % to about 10%, about 0.005% to about 9%, about 0.01% to about 8%, about 0.05% to about 7%, about 0.1% to about 6%, about 0.5% to about 5%, or about 1% to about 4% by weight of the high protein beverage, or at a level of about 0.1%, 0.2%, 0.3%, 0.4%, 0.5%, 0.6%, 0.7%, 0.8%, 0.9% or about 1% by weight of the high protein beverage, or any ranges or single values within these ranges.

The pH of at least certain exemplary embodiments of the high protein beverages disclosed here can be a value within the range of from about 1.0 to about 7.5, about 2.0 to about 5.5, from about 2.5 to about 4.5, or from about 3 to about 4, or at a level of about 1.0, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, 5.6, 5.7, 5.8, 5.9, 6.0, 6.1, 6.2, 6.3, 6.4, 6.5, 6.6, 6.7, 6.8, 6.9, 7.0, 7.1, 7.2, 7.3, 7.4 or about 7.5, or any ranges or single values within these ranges. The acid in certain exemplary embodiments enhances high protein beverage flavor. Too much acid can impair the high protein beverage flavor and result in sourness or other off-taste, while too little acid can make the high protein beverage taste flat.

The particular acid or acids chosen and the amount used will depend, in part, on the other ingredients, the desired shelf life of the high protein beverage product, as well as effects on the high protein beverage pH, titratable acidity, and taste. Those skilled in the art, given the benefit of this disclosure, will recognize that when preparing high protein beverage products containing peptide-based artificial sweeteners such as aspartame, the resulting high protein beverage composition is best maintained below a certain pH to retain the sweetening effect of the artificial sweetener. In the formation of calcium-supplemented high protein beverages, the presence of calcium salts increases the pH which requires additional acids to both assist the dissolution of the salt and maintain a desirable pH for stability of the artificial sweetener. The presence of the additional acid in the high protein beverage composition, which increases the titratable acidity of the composition, will result in a more tart or sour taste to the resulting high protein beverage. It will be within the ability of those skilled in the art, given the benefit of this disclosure, to select a suitable acid or combination of acids and the amounts of such acids for the acidulant component of any particular embodiment of the high protein beverages containing protein disclosed here.

Certain exemplary embodiments of the high protein beverage products disclosed here also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04% by weight, with an amount of about 0.03% being typical for certain high protein beverages. The amount will depend on the type of alkaline agents and on the degree to which the pH is to be adjusted.

Weighting agents, which can also act as clouding agents, are typically used to keep the emulsion droplets dispersed in the high protein beverage. Examples of such weighting agents are brominated vegetable oils, rosin esters and, in particular, ester gums. Any weighting agent that is commercially available can be used in high protein beverages containing protein disclosed here. Besides weighting agents, emulsifiers and emulsion stabilizers can be used to stabilize the flavor emulsion droplets. Examples of such emulsifiers and emulsion stabilizers include gums, pectins, cellulose, polysorbates, sorbitan esters and propylene glycol alginates.

Carbon dioxide is used to provide effervescence to certain exemplary embodiments of the high protein beverage products disclosed here. Any of the techniques and carbonating equipment known in the art for carbonating high protein beverages can be employed. Carbon dioxide can enhance the high protein beverage taste and appearance and can aid in safeguarding the high protein beverage purity by inhibiting and destroying objectionable bacteria. In certain embodiments, for example, the high protein beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 60° F (16° C) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the high protein beverage. The carbonation can be natural or synthetic.

Optionally, caffeine can be added to various embodiments of the high protein beverages disclosed here. The amount of caffeine added is determined by the desired high protein beverage properties, any applicable regulatory provisions of the country where the high protein beverage is to be marketed, etc. The caffeine must be of a purity acceptable for use in foods and high protein beverages. The caffeine can be natural (e.g., from kola, cocoa nuts, coffee (e.g., green and/or roasted) and/or tea) or synthetic in origin. If caffeine is present in the formulation prior to adding additional caffeine (e.g., in coffee or tea beverages), the caffeine present in them should be factored into the percentage of caffeine in the high protein beverage. The amount of caffeine can be from about 0.002% to about 0.05% (check %) by weight of the single strength high protein beverage. In certain embodiments, the amount of caffeine is from about 0.005% to about 0.02%. In certain exemplary embodiments caffeine is included at a level of 0.02 percent or less by weight of the high protein beverage. For concentrates or syrups, the caffeine level can be from about 0.006% to about 0.15%. Caffeine levels can be higher, for example, if flavored coffees which have not been decaffeinated are used since these materials contain caffeine naturally.

The high protein beverage products disclosed here may contain additional ingredients, including, generally, any of those typically found in high protein beverage formulations. These additional ingredients, for example, can typically be added to a stabilized high protein beverage concentrate. Examples of such additional ingredients include, but are not limited to, caffeine, caramel and other coloring agents or dyes, antifoaming agents, gums, emulsifiers, tea solids, cloud components, and nutritional supplements.

Examples of nutritional supplement ingredients are known to those of ordinary skill in the art and include, without limitation, vitamins, minerals, herbs or botanicals, amino acids, or essential fatty acids or enzymes, proteases, tissues, organs, glands or portions thereof. Vitamins include, but are not limited to, vitamin A, vitamin D, vitamin E (tocopherol), vitamin C (ascorbic acid), vitamin B₁ (thiamine), vitamin B₂ (riboflavin), vitamin B₃ (niacin), vitamin B₅ (pantothenic acid), vitamin B₆ (pyridoxine), vitamin B₇ (biotin), vitamin B₉ (folic acid), vitamin B₁₂ (cyanocobalamin), vitamin K (naphthoquinone), vitamin D (D₁ (molecular compound of ergocalciferol with lumisterol, 1:1); D₂ (ergocalciferol or calciferol); D₃ (cholecalciferol); D₄ (dihydrotachysterol); D₅ (sitocalciferol)), and combinations thereof. Supplements are typically present in amounts generally accepted under good manufacturing practices and are typically present in amounts between about 1% to about 100% RDV, where such RDV are established. In certain embodiments, the nutritional supplement ingredient(s) may be present in an amount of from about 5% to about 20% RDV, where established.

In certain exemplary embodiments of the present invention, a nutrition beverage composition is provided which includes calcium. The amount of calcium can be from between about 1% to about 100% or more of the RDV for calcium, or any ranges or single values within this range. In certain aspects, a nutrition beverage composition is provided which includes at least about 25%, about 50%, about 75%, about 100% or more of the RDV of calcium.

In certain exemplary embodiments of the present invention, a nutrition beverage composition is provided which includes one or any combination of D vitamins. The amount of one or more D vitamins can be from between about 1% to about 100% or more of the RDV for calcium, or any ranges or single values within this range. In certain aspects, a nutrition beverage composition is provided which includes at least about 25%, about 50%, about 75%, about 100% or more of the RDV of one or more D vitamins.

High protein beverages containing protein disclosed here can optionally further include one or more colorants. As used herein, the "colorant" is intended to mean any compound that imparts color, which includes, but is not limited to natural pigments, synthetic pigment, color additives and mixtures thereof. Natural and artificial colors may be used. One or more FD&C dyes (e.g., yellow #5, blue #2, red # 40) and/or FD&C lakes can be used to color high protein beverages disclosed here. Exemplary lake dyes which may be used in high protein beverages containing protein disclosed here are the FDA-approved Lake, such as Lake red #40, yellow #6, blue #1, and the like. Additionally, a mixture of FD&C dyes or a FD&C lake dye in combination with other conventional food and food colorants may be used. Other coloring agents, for example, natural agents may be utilized. Non-limiting examples of such other coloring agents include fruit and vegetable juices (e.g., Exberry natural colors (GNT International B.V., The Netherlands) and/or powders, riboflavin, carotenoids (for example, beta-carotene), tumeric, and lycopenes. The exact amount of coloring agent used will vary, depending on the agents used and the intensity desired in the finished product. Generally, if utilized, the coloring agent should be present at a level of from about 0.0001% to about 0.5%, from about 0.001% to about 0.1%, or from about 0.004% to about 0.1%, by weight or volume of the composition. Certain formulations will have no added colorant.

In certain embodiments, the high protein beverage products disclosed here optionally include one or more colorants present at a level from about 0.001% to about 0.5%, about 0.001% to about 0.4%, about 0.005% to about 0.3%, about 0.01% to about 0.2%, about 0.05% to about 0.1%, or from about 0.1% to about 0.5% by weight of the high protein beverage, or at a level of about 0.001%, 0.0025%, 0.005%, 0.0075%, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9% or 1.0% by weight of the high protein beverage, or any ranges or single values within these ranges.

Preservatives may be used in at least certain embodiments of the high protein beverage products disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the high protein beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., (take out sodium sorbate. It is unstable and nobody uses it), calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations thereof.

Preservatives can be used in amounts not exceeding mandated maximum levels under applicable laws and regulations. The level of preservative used typically is adjusted according to the planned final product pH, as well as an evaluation of the microbiological spoilage potential of the particular high protein beverage formulation. The maximum level employed typically is about 0.05% by weight of the high protein beverage. It will be within the ability of those skilled in the art, given the benefit of this disclosure, to select a suitable preservative or combination of preservatives for high protein beverages according to this disclosure.

Other methods of beverage preservation suitable for at least certain exemplary embodiments of the high protein beverage products disclosed here include, e.g., aseptic packaging and/or heat treatment or thermal processing steps, such as hot filling and tunnel pasteurization. Such steps can be used to reduce yeast, mold and microbial growth in the high protein beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

In at least certain exemplary embodiments, the high protein beverage products disclosed here are optionally refrigerated, e.g., at temperatures ranging from about 4° C to about 8° C (e.g., a "refrigerated state"). In certain embodiments, the high protein beverage products disclosed here are optionally stored in a refrigerated state subsequent to packaging and/or prior to consumption. In other embodiments, the high protein beverage products disclosed here are optionally stored in a refrigerated state subsequent to packaging, during storage, during shipment, and/or prior to consumption or any combination of these. In still other embodiments, the high protein beverage products disclosed here are optionally packaged under a state of refrigeration and optionally stored in a refrigerated state subsequent to packaging, during storage, during shipment and/or prior to consumption or any combination of these. In yet other embodiments, the high protein beverage products disclosed here are ingested when in a refrigerated state.

### EXAMPLES

### Example I

### Clear High Protein Beverage

A clear high protein beverage composition was prepared. The particular ingredients and the weight percent of each ingredient included in the clear high protein beverage composition are listed below in Table 1. The ingredients used were as follows: water, whey protein isolate (alpha-lactalbumin (ALA)), polydextrose, hydrolyzed collagen, sucrose, phosphoric acid, citric acid, tartaric acid, potassium citrate, natural flavor, Sucralose and salt. In certain exemplary embodiments, the clear high protein beverage composition is hot-filled (e.g., at 202 °F for 30 seconds), shelf stable, and is refrigerated after opening.

The natural flavors advantageously masked negative taste and astringency present in the clear high protein beverage when compared with a beverage composition having the same formulation except lacking the natural flavors. The beverage composition was clear, stable, and exhibited little or no astringent and/or negative aftertaste(s) from the ALA and/or hydrolyzed collagen.

**Table 1.**

| **Ingredient** | **Weight % in the Beverage Composition** | **Grams in the Beverage Composition** |
|---|---|---|
| Water | 84.81 | 203.53 |
| ALA | 4.16 | 9.98 |
| Polydextrose | 3.44 | 8.26 |
| Sugar | 2.00 | 7.20 |
| Gelita (hydrolyzed collagen) | 2.29 | 5.50 |
| Phosphoric Acid (75%) | 0.70 | 1.68 |
| Sucralose (1%) | 0.58 | 1.39 |
| Citric acid (50%) | 0.40 | 0.96 |
| Tartaric Acid (30%) | 0.40 | 0.96 |
| Potassium Citrate | 0.11 | 0.26 |
| Natural Flavors | 0.11 | 0.25 |
| NaCl | 0.01 | 0.02 |

A 240 gram (8.47 oz.) serving of the clear high protein beverage composition contained 90 calories, 0 grams fat, 0 mg cholesterol, 120 mg sodium, 14 grams total carbohydrate (including 8 grams of dietary fiber and 5 grams of sugar), 14 grams protein and 2% of the RDV of iron.

### Example II

### Clear High Protein Beverage

A clear high protein beverage composition was prepared. The particular ingredients and the weight percent of each ingredient included in the clear high protein beverage composition are listed below in Table 2. The ingredients used were as follows: water, ALA, hydrolyzed collagen, sucrose, natural flavor, potassium citrate, salt and Sucralose. In certain exemplary embodiments, the clear high protein beverage composition is hot-filled (e.g., at 285 °F for 3 seconds), shelf stable, and is refrigerated after opening.

The natural flavor advantageously masked negative taste and astringency present in the clear high protein beverage when compared with a beverage composition having the same formulation except lacking the natural flavor. The natural flavor masked bitter flavors in the beverage well, both at cold and warm temperatures. Given its good taste at various temperatures, the clear high protein beverage of this example can be used as a coffee and/or tea replacement beverage. The clear high protein beverage composition was clear, stable, and exhibited little or no astringent and/or negative aftertaste(s) from the ALA and/or hydrolyzed collagen.

**Table 2.**

| **Ingredient** | **Weight % in the Beverage Composition** | **Grams in the Beverage Composition** |
|---|---|---|
| Water | 91.10 | 218.64 |
| ALA | 4.16 | 9.98 |
| Hydrolyzed Collagen | 2.29 | 5.50 |
| Sugar | 2.00 | 4.80 |
| Sucralose (1%) | 0.20 | 0.48 |
| Natural Flavor | 0.12 | 0.29 |
| Potassium Citrate | 0.11 | 0.26 |
| NaCl | 0.02 | 0.05 |
| SUM | 100.00 | 240.00 |

A 240 gram (8.47 oz.) serving of the jasmine tea-flavored clear high protein beverage composition contained 80 calories, 0 grams fat, 0 mg cholesterol, 130 mg sodium, 5 grams total carbohydrate (including 0 grams of dietary fiber and 5 grams of sugar), 14 grams protein and 2% of the RDV of iron.

### Example III

### Pomegranate-Blueberry Juice Clear High Protein Beverage

A pomegranate-blueberry juice-flavored clear high protein beverage composition was prepared. The ingredients used were as follows: pomegranate-blueberry juice beverage (filtered water, apple juice concentrate, pomegranate juice concentrate, grape juice concentrate, blueberry juice concentrate, natural flavors, malic acid, citric acid, ascorbic acid (vitamin C), rebaudioside A (Pure Via™ brand), vitamin E acetate (vitamin E)), water, whey protein isolate (alpha-lactalbumin), polydextrose, hydrolyzed collagen, phosphoric acid, natural flavor, salt and Sucralose. In certain exemplary embodiments, the pomegranate-blueberry-flavored high protein beverage composition is hot-filled (e.g., at 202 °F for 3 seconds), shelf stable, and is refrigerated after opening.

The pomegranate and blueberry flavors advantageously masked negative taste and astringency present in the clear high protein beverage when compared with a beverage composition having the same formulation except lacking the pomegranate and blueberry flavors. The clear high protein beverage composition was clear, stable, and exhibited little or no astringent and/or negative aftertaste(s) from the ALA and/or hydrolyzed collagen.

A 240 gram (8.47 oz.) serving of the pomegranate-blueberry-flavored clear high protein beverage composition contained 90 calories, 0 grams fat, 0 mg cholesterol, 140 mg sodium, 15 grams total carbohydrate (including 7 grams of dietary fiber and 5 grams of sugar), 14 grams protein, 45% of the RDV of vitamin C and 2% of the RDV of iron.

### Example IV

### Pomegranate-Blueberry Clear High Protein Beverage Sweetness Determination

Pomegranate-blueberry-flavored clear high protein beverage compositions of Example III containing various amounts of sweetener (e.g., Sucralose and/or rebaudioside A) were prepared having a Brix of 3.3, 4.7, 6.0 or 7.4. The sweetness of each formulation is evaluated by human testers.

### Example V

### Clear High Protein Beverage

A clear high protein beverage composition was prepared. The ingredients used were as follows: water, hydrolyzed whey protein, hydrolyzed collagen, natural flavor, pectin, citric acid, sodium citrate, sucrose, Sucralose, acesulfame potassium and neotame. In certain aspects, the clear high protein beverage is formulated to include ALA, either as a substitute for one or both of hydrolyzed whey protein and hydrolyzed collagen, or in addition to one or both of hydrolyzed whey protein and hydrolyzed collagen. The clear high protein beverage composition had a Brix value of 8.6, an acid content of 0.25% and a pH of 5.0. According to certain exemplary embodiments, the clear high protein beverage composition is hot-packed (e.g., at 205 °F). The clear high protein beverage composition contained 7.0 g protein per 4 ounce serving. The clear high protein beverage composition was clear, stable, and exhibited little or no astringent and/or negative aftertaste(s) from the whey protein hydrolysate and/or protein collagen.

### Example VI

### Clear High Protein Beverage

A clear high protein beverage composition was prepared. The ingredients used were as follows: water, hydrolyzed whey protein, natural flavor, hydrolyzed collagen, cocoa powder, sodium citrate, sucrose, carrageenan, Sucralose, acesulfame potassium and neotame. In certain aspects, the clear high protein beverage is formulated to include ALA, either as a substitute for one or both of hydrolyzed whey protein and hydrolyzed collagen, or in addition to one or both of hydrolyzed whey protein and hydrolyzed collagen. The clear high protein beverage composition had a Brix value of 8.8 and a pH of 6.0. According to certain exemplary embodiments, the clear high protein beverage composition is hot-packed (e.g., at 205 °F). The clear high protein beverage composition contained 7.0 g protein per 4 ounce serving. The clear high protein beverage composition was clear, stable, and exhibited little or no astringent and/or negative aftertaste(s) from the whey protein hydrolysate and/or protein collagen.

### Example VII

### Fruit Punch Clear High Protein Beverage Compositions

### Formula 1

A first fruit punch-flavored clear high protein beverage composition was prepared. The ingredients used were as follows: 85.58 wt. % water, 4.68 wt. % whey protein isolate, 3.44 wt. % polydextrose, 3.00 wt. % sugar, 1.78 wt. % hydrolyzed collagen, 1.14 wt. % phosphoric acid, 0.20 wt. % natural tropical punch flavor, 0.11 wt. % potassium citrate, 0.05 wt. % natural color, 0.01 wt. % salt and 0.01 wt. % Sucralose. (Total of ingredients = 100 wt. %.)

### Formula 2

A second fruit punch-flavored clear high protein beverage composition was prepared. The ingredients used were as follows: 85.88 wt. % water (1631.73 kg), 4.68 wt. % whey protein isolate (88.88 kg), 3.44 wt. % polydextrose (65.33 kg), 3.00 wt. % sugar (56.97 kg), 1.78 wt. % hydrolyzed collagen (33.80 kg), 0.90 wt. % phosphoric acid (17.09 kg), 0.20 wt. % tropical punch flavor (3.80 kg), 0.11 wt. % potassium citrate (2.09 kg), 0.01 wt. % salt (0.19 kg) and 0.01 wt. % Sucralose (0.11 kg). (Total % of ingredients =100 wt. %; total weight of ingredients = 1900.00 kg batch.)

### Formula 3

A third fruit punch-flavored clear high protein beverage composition was prepared. The ingredients used were as follows: 85.58 wt. % water, 4.68 wt. % whey protein isolate, 3.44 wt. % polydextrose, 3.00 wt. % sugar, 1.78 wt. % hydrolyzed collagen, 1.14 wt. % phosphoric acid, 0.20 wt. % natural tropical punch flavor, 0.11 wt. % potassium citrate, 0.05 % color, 0.01 wt. % salt and 0.01 wt. % Sucralose. (Total of ingredients = 100 wt. %.)

The third fruit punch-flavored clear high protein beverage composition contained 1.75 g protein/ounce, 5.91 % total protein, 15.00 mg/ounce sodium, 6.00 mg/ounce potassium, a sweetness equivalency value (SEV) of 6.50, a pH of 3.5, and a PDCAAS score of 1.00.

### Formula 4

A fourth fruit punch-flavored clear high protein beverage composition was prepared. The ingredients used were as follows: 85.57 wt. % water, 4.68 wt. % ALA, 3.44 wt. % polydextrose, 3.00 wt. % sugar, 1.78 wt. % hydrolyzed collagen, 1.14 wt. % phosphoric acid (75% stock), 0.20 wt. % natural tropical punch flavor, 0.11 wt. % potassium citrate, 0.05 % color, 0.01 wt. % salt and 0.01 wt. % Sucralose. (Total of ingredients = 100 wt. %.) Ingredient list: water, whey protein isolate, polydextrose, sucrose, hydrolyzed collagen, phosphoric acid, natural flavor, potassium citrate, fruit and vegetable juice (color), salt, Sucralose. (Total of ingredients = 100 wt. %.)

### Formula 5

A fifth fruit punch-flavored clear high protein beverage composition was prepared. The ingredients used were as follows: 86.09 wt. % water, 6.59 wt. % whey protein isolate (GRANDE ULTRA® 9250), 3.44 wt. % polydextrose (Danisco), 3.00 wt. % sugar (Imperial Sugar Company, Sugar Land, TX), 0.36 wt. % phosphoric acid (75% stock) (Innophos, Cranbury Township, NJ), 0.20 wt. % natural tropical punch flavor, 0.11 wt. % potassium citrate (Tate & Lyle PLC, London, UK), 0.07 wt. % phenylalanine (DNP International, Santa Fe Springs, CA), 0.06 wt. % histidine (DNP International, Santa Fe Springs, CA), 0.06 wt. % Shade Mandarin (GNT International B.V., The Netherlands), 0.01 wt. % salt (Morton, Chicago, IL), 0.01 % Sucralose (Tate & Lyle PLC, London, UK). (Total of ingredients = 100 wt. %.) Ingredient list: water, whey protein isolate, polydextrose, sucrose, phosphoric acid, natural flavor, potassium citrate, L-phenylalanine, L-histidine, fruit and vegetable juice (color), salt, Sucralose.

9250 whey protein isolate provided an advantage of being considerably less expensive than ALA (approximately $8.50/pound vs. $24.00/pound) and having good availability. The PDCAAS of high protein beverage compositions including 9250 whey protein isolate as their sole protein source was 0.75, which was increased to 1.0 by the addition of amino acids. Other proteins, peptides and/or polypeptide could be added to increase the PDCAAS score of high protein beverage compositions including 9250 whey protein isolate. Surprisingly, Formula 5 was determined to be very clear and required the addition of less acid, e.g., phosphoric acid, to achieve good taste as compared with Formula 4.

### Formula 5

A fifth fruit punch-flavored clear high protein beverage composition was prepared. The ingredients used were as follows: 85.583 wt. % water, 4.680 wt. % alpha-lactalbumin (Davisco), 3.440 wt. % polydextrose: Litesse Ultra (Danisco), 3.000 wt. % extra fine granulated sugar (Imperial), 1.780 wt. % hydrolyzed collagen (Gelita), 1.140 wt. % phosphoric acid (65 % FCC) (Innophos), 0.200 wt. % tropical punch flavor, 0.110 wt. % potassium citrate monohydrate (Tate & Lyle), 0.050 % Exberry shade "Mandarin" (GNT International B.V., The Netherlands), 0.010 wt. % evaporated salt (Morton Purex AP) and 0.007 wt. % Sucralose: Splenda (Tate & Lyle). (Total of ingredients = 100.000 wt. %.)

The fifth fruit punch-flavored clear high protein beverage composition had a pH of 3.0, a viscosity (25C) of 2 cP, a Brix of 14-15, and a solids % of 13-14.

### Example VIII

### Lemon Ice Clear High Protein Beverage Compositions

### Formula 1

A first lemon ice-flavored clear high protein beverage composition was prepared. The ingredients used were as follows: 85.66 wt. % water, 4.68 wt. % whey protein isolate, 3.44 wt. % polydextrose, 3.00 wt. % sugar, 1.78 wt. % hydrolyzed collagen, 1.14 wt. % phosphoric acid, 0.11 wt. % potassium citrate, 0.10 wt. % lemon juice flavor, 0.06 wt. % natural color, 0.01 wt. % grapefruit flavor, 0.01 wt. % salt and 0.01 wt. % Sucralose. (Total of ingredients = 100 wt. %.)

### Formula 2

A second lemon ice-flavored clear high protein beverage composition was prepared. The ingredients used were as follows: 85.96 wt. % water (1633.31 kg), 4.68 wt. % whey protein isolate (88.92 kg), 3.44 wt. % polydextrose (65.36 kg), 3.00 wt. % sugar (57.00 kg), 1.78 wt. % hydrolyzed collagen (33.82 kg), 0.90 wt. % phosphoric acid (17.10 kg), 0.01 wt. % grapefruit flavor (0.19 kg), 0.1 wt. % lemon juice flavor (0.19 kg), 0.11 wt. % potassium citrate (2.09 kg), 0.01 wt. % salt (0.19 kg) and 0.01 wt. % Sucralose (0.11 kg). (Total % of ingredients = 100 wt. %; total weight of ingredients = 1900.00 kg batch.)

### Formula 3

A third lemon ice-flavored clear high protein beverage composition was prepared. The ingredients used were as follows: 85.66 wt. % water, 4.68 wt. % whey protein, 3.44 wt. % polydextrose, 3.00 wt. % sugar, 1.78 wt. % hydrolyzed collagen, 1.14 wt. % phosphoric acid, 0.01 wt. % grapefruit flavor, 0.10 wt. % lemon juice flavor, 0.11 wt. % potassium citrate, 0.06 wt. % color, 0.01 wt. % salt and 0.01 wt. % Sucralose.

### (Total % of ingredients = 100 wt %.)

The third lemon ice-flavored clear high protein beverage composition contained 1.75 g protein/ounce, 5.91 % total protein, 15.00 mg/ounce sodium, 6.00 mg/ounce potassium, an SEV of 6.50, a pH of 3.5, and a PDCAAS score of 1.00.

### Formula 4

A fourth lemon ice-flavored clear high protein beverage composition was prepared. The ingredients used were as follows: 85.66 wt. % water, 4.680 wt. % alpha-lactalbumin (Davisco), 3.440 wt. % polydextrose: Litesse Ultra (Danisco), 3.000 wt. % extra fine granulated sugar (Imperial), 1.780 wt. % hydrolyzed collagen (Gelita), 1.140 wt. % phosphoric acid (75% FCC) (Innophos), 0.010 wt. % grapefruit flavor, 0.10 wt. % lemon juice flavor, 0.11 wt. % potassium citrate monohydrate (Tate & Lyle), 0.060 wt. % Exberry shade "Mango Yellow" (GNT International B.V., The Netherlands), 0.010 wt. % evaporated salt (Morton Purex AP) and 0.007 wt. % Sucralose: Splenda micronized (Tate & Lyle). (Total % of ingredients = 100.000 wt %.)

The fourth lemon ice-flavored clear high protein beverage composition had a pH of 3.0, a viscosity (25C) of 2 cP, a Brix of 14-15, and a solids % of 13-14.

### Example IX

### Pomegranate-Blueberry Clear High Protein Beverage Compositions

### Formula 1

A first pomegranate-blueberry-flavored clear high protein beverage composition was prepared. The ingredients used were as follows: 85.63 wt. % water, 4.68 wt. % whey protein isolate, 3.44 wt. % polydextrose, 3.00 wt. % sugar, 1.78 wt. % hydrolyzed collagen, 1.14 wt. % phosphoric acid, 0.15 wt. % blueberry pomegranate flavor, 0.11 wt. % potassium citrate, 0.05 wt. % natural color, 0.01 wt. % salt and 0.01 wt. % Sucralose. (Total of ingredients = 100 wt. %.)

### Formula 2

A second pomegranate-blueberry-flavored clear high protein beverage composition was prepared. The ingredients used were as follows: 86.00 wt. % water (1633.99 kg), 4.68 wt. % whey protein isolate (88.92 kg), 3.44 wt. % polydextrose (65.36 kg), 3.00 wt. % sugar (57.00 kg), 1.78 wt. % hydrolyzed collagen (33.82 kg), 0.90 wt. % phosphoric acid (17.10 kg), 0.07 wt. % blueberry pomegranate flavor (1.42 kg), 0.11 wt. % potassium citrate (2.09 kg), 0.01 wt. % salt (0.19 kg) and 0.01 wt. % Sucralose (0.11 kg). (Total of ingredients = 100 wt. %; total weight of ingredients = 1900.00 kg batch.)

### Formula 3

A third pomegranate-blueberry-flavored clear high protein beverage composition was prepared. The ingredients used were as follows: 85.63 wt. % water, 4.68 wt. % whey protein isolate, 3.44 wt. % polydextrose, 3.00 wt. % sugar, 1.78 wt. % hydrolyzed collagen, 1.14 wt. % phosphoric acid, 0.15 wt. % blueberry pomegranate flavor, 0.11 wt. % potassium citrate, wt. % 0.05 color, 0.01 wt. % salt, 0.01 wt. % Sucralose. (Total of ingredients = 100 wt. %.)

The third pomegranate-blueberry-flavored clear high protein beverage composition contained 1.75 g protein/ounce, 5.91 wt. % total protein, 15.00 mg/ounce sodium, 6.00 mg/ounce potassium, an SEV of 6.50, a pH of 3.5, and a PDCAAS score of 1.00.

### Formula 4

A fourth pomegranate-blueberry-flavored clear high protein beverage composition was prepared. The ingredients used were as follows: 85.633 wt. % water, 4.680 wt. % alpha-lactalbumin (4.680), 3.440 wt. % polydextrose: Litesse Ultra (Danisco), 3.000 wt. % extra fine granulated sugar (Imperial), 1.780 wt. % hydrolyzed collagen (Gelita), 1.140 wt. % phosphoric acid (75% FCC) (Innophos), 0.15 wt. % blueberry pomegranate flavor, 0.110 wt. % potassium citrate monohydrate (Tate & Lyle), wt. % 0.050 Exberry shade "Bordeaux" (GNT International B.V., The Netherlands), 0.010 wt. % evaporated salt (Morton Purex AP), 0.01 wt. % Sucralose: Splenda micronized (Tate & Lyle). (Total of ingredients = 100.000 wt. %.)

The fourth pomegranate-blueberry-flavored clear high protein beverage composition had a pH of 3.0, a viscosity (25C) of 2 cP, a Brix of 14-15, and a solids % of 13-14.

### Example X

### Jasmine Tea Clear High Protein Beverage Composition

A jasmine tea-flavored clear high protein beverage composition was prepared. The ingredients used were as follows: 91.29 wt. % water (1734.47 kg), 4.68 wt. % whey protein isolate (88.88 kg), 2.00 wt. % sugar (38.00 kg), 1.78 wt. % hydrolyzed collagen (33.86 kg), 0.12 wt. % natural jasmine tea flavor (2.28 kg), 0.11 wt. % potassium citrate (2.09 kg), 0.02 wt. % salt (0.38 kg) and 0.00 wt. % Sucralose (0.04 kg). (Total of ingredients = 100 wt. %; total weight of ingredients = 1900.00 kg batch.)

The jasmine tea-flavored clear high protein beverage composition contained 1.75 g protein/ounce, 5.91 wt. % total protein, 15.00 mg/ounce sodium, 6.00 mg/ounce potassium, an SEV of 3.20, a pH of 7.05, and a PDCAAS score of 1.00.

### Example XI

### Clear Strong Water Compositions

One objective of the Strong Water compositions described herein is to deliver a 7 gram unit of protein per 8 ounce serving. In certain embodiments, Strong Water compositions have a PDCAAS of about 1.0. In certain embodiments, Strong Water formulations are clear. In some embodiments, Strong Water compositions are sweetened, e.g., with high intensity and/or low intensity sweeteners. In other embodiments, Strong Water compositions contain little or no added sweetener(s), e.g., high intensity and/or low intensity sweeteners. In other embodiments, Strong Water compositions contain little or no added flavor. In still other embodiments, Strong Water compositions contain little or no added colorant. In certain embodiments, Strong Water compositions are light and refreshing taste.

### Formula 1A

An unflavored clear Strong Water formulation was made containing 93.90 wt. % water, 3.25 wt. % ALA, 2.50 wt. % sucrose, and 0.35 wt. % phosphoric acid (75 % stock). Ingredient list: water, whey protein isolate, sucrose, phosphoric acid. Nutrition facts: Serving size, 236 g (8 oz.); calories, 50; total fat, 0 g; cholesterol, 0 mg; sodium, 80 mg (3 % RDV); total carbohydrate, 6 g (2 % RDV) (dietary fiber, 0 g; sugars, 6 g); protein, 7 g.

Manufacturing/Storage: containers are hot-filled (202 °F for 30 seconds), shelf stable, and are refrigerated after opening.

### Formula 1B

An unflavored clear Strong Water formulation was made containing 94.90 wt. % water, 3.25 wt. % ALA, 1.50 wt. % sucrose, and 0.35 wt. % phosphoric acid (75 % stock). Ingredient list: water, whey protein isolate, sucrose, phosphoric acid. Nutrition facts: Serving size, 236 g (8 oz.); calories, 40; total fat, 0 g; cholesterol, 0 mg; sodium, 75 mg (3 % RDV); total carbohydrate, 4 g (1 % RDV) (dietary fiber, 0 g; sugars, 4 g); protein, 7 g.

Manufacturing/Storage: containers are hot-filled (202 °F for 30 seconds), shelf stable, and are refrigerated after opening.

### Formula 1C

An unflavored clear Strong Water formulation was made containing 95.13 wt. % water, 3.30 wt. % whey protein isolate (GRANDE ULTRA® 9250), 1.50 wt. % sucrose, 0.04 wt. % phenylalanine (DNP International, Santa Fe Springs, CA), and 0.03 wt. % histidine (DNP International, Santa Fe Springs, CA). (Total of ingredients = 100 wt. %.) Ingredient list: water, whey protein isolate, sucrose, L-phenylalanine, L-histidine.

9250 whey protein isolate provided an advantage of being considerably less expensive than ALA (approximately $8.50/pound vs. $24.00/pound) and having good availability. The PDCAAS of the unflavored Strong Water formulation including 9250 whey protein isolate as its sole protein source was 0.75, which was increased to 1.0 by the addition of amino acids. Other proteins, peptides and/or polypeptide could be added to increase the PDCAAS score of an unflavored Strong Water formulation containing 9250 whey protein isolate. Surprisingly, Formula 1C was determined to be very clear and did not require the addition of acid, e.g., phosphoric acid, to achieve good taste as compared with Formula 1B.

### Formula 2

A mixed berry-flavored clear Strong Water formulation was made containing 90.41 wt. % water, 3.44 wt. % polydextrose, 3.25 wt. % ALA, 2.50 wt. % sucrose, 0.35 wt. % phosphoric acid (75 % stock), 0.05% wt. mixed berry flavor (Takasago International Corp., Rockleigh, NJ). Ingredient list: water, polydextrose, whey protein isolate, sucrose, phosphoric acid, natural flavor. Nutrition facts: Serving size, 236 g (8 oz.); calories, 60; total fat, 0 g; cholesterol, 0 mg; sodium, 75 mg (3 % RDV); total carbohydrate, 14 g (5 % RDV) (dietary fiber, 7 g (28 % RDV), sugars, 6 g); protein, 7 g.

Manufacturing/Storage: containers are hot-filled (202 °F for 30 seconds), shelf stable, and are refrigerated after opening.

### Formula 3A

A ginger-flavored clear Strong Water formulation was made containing 95.11 wt. % water, 3.25 wt. % ALA, 1.25 wt. % sucrose, 0.35 wt. % phosphoric acid (75 % stock), 0.04 wt. % natural ginger flavor. Ingredient list: water, whey protein isolate, sucrose, phosphoric acid, natural flavor. Nutrition facts: Serving size, 236 g (8 oz.); calories, 40; total fat, 0 g; cholesterol, 0 mg; sodium, 75 mg (3% RDV); total carbohydrate, 3 g (1% RDV) (dietary fiber, 0 g; sugars, 3 g); protein, 7 g.

Manufacturing/Storage: containers are hot-filled (202 °F for 30 seconds), shelf stable, and are refrigerated after opening.

### Formula 3B

A ginger-flavored, unsweetened clear Strong Water formulation was made containing 96.36 wt. % water, 3.25 wt. % ALA, 0.35 wt. % phosphoric acid (75 % stock), 0.04 wt. % natural ginger flavor. Ingredient list: water, whey protein isolate, phosphoric acid, natural flavor. Nutrition facts: Serving size, 236 g (8 oz.); calories, 30; total fat, 0 g; cholesterol, 0 mg; sodium, 75 mg (3 % RDV); total carbohydrate, 0 g; protein, 7 g.

Manufacturing/Storage: containers are hot-filled (202 °F for 30 seconds), shelf stable, and are refrigerated after opening.

### Formula 4A

A tropical punch-flavored clear Strong Water formulation was made containing 91.20 wt. % water, 5.00 wt. % sucrose, 3.25 wt. % ALA, 0.35 wt. % phosphoric acid (75 % stock), 0.15 wt. % tropical punch flavor, 0.05 wt. % shade mandarin color. Ingredient list: water, sucrose, whey protein isolate, phosphoric acid, natural flavor, fruit and vegetable juice (color). Nutrition facts: Serving size, 236 g (8 oz.); calories, 80; total fat, 0 g; cholesterol, 0 mg; sodium, 75 mg (3% RDV); total carbohydrate, 12 g (4% RDV) (dietary fiber, 0 g; sugars, 12 g); protein, 7 g.

Manufacturing/Storage: containers are hot-filled (202 °F for 30 seconds), shelf stable, and are refrigerated after opening.

### Formula 4B

A tropical punch-flavored clear Strong Water formulation was made containing 91.43 wt. % water, 5.00 wt. % sucrose, 3.30 wt. % whey protein isolate (GRANDE ULTRA® 9250), 0.15 wt. % natural tropical punch flavor, 0.05 wt. % Shade Mandarin color, 0.04 wt. % phenylalanine (DNP International, Santa Fe Springs, CA), and 0.03 wt. % histidine (DNP International, Santa Fe Springs, CA). (Total of ingredients = 100 wt. %.) Ingredient list: water, sucrose, whey protein isolate, natural flavor, fruit and vegetable juice (color), L-phenylalanine, L-histidine.

The PDCAAS of the tropical punch-flavored clear Strong Water formulation including 9250 whey protein isolate as its sole protein source was 0.75, which was increased to 1.0 by the addition of amino acids. Other proteins, peptides and/or polypeptide could be added to increase the PDCAAS score of a tropical punch-flavored Strong Water formulation containing 9250 whey protein isolate. Surprisingly, Formula 4B was determined to be very clear and did not require the addition of acid, e.g., phosphoric acid, to achieve good taste as compared with Formula 4A.

### Example XII

### Beverage Compositions

**Table 1. An orange mango-flavored beverage according to certain embodiments.**

| | **Orange Mango** | |
|---|---|---|
| | | |
| | | |

| | **INGREDIENTS** | **%** |
|---|---|---|
| | | |
| 17V41AVG | White Grape Juice Conc | 5.41 |
| 17R08ABW | Apple Juice Conc. | 2.01 |
| 170D8MBJ | Fiber | 1.14 |
| 17C01SUC | 25% Sucralose | 0.02 |
| 1743WHR | Whey Protein Isolate | 3.48 |
| | Flavor and Flavor Modifier | 0.42 |
| | Color | 0.10 |
| 17003PEO | Phosphoric Acid 80% | 0.07 |
| | Water | 87.35 |
| | | |
| | TOTAL | 100.00 |

**Table 2. A pomegranate blueberry-flavored beverage according to certain embodiments.**

| | **Pomegranate Blueberry** | |
|---|---|---|
| | | |
| | | |

| | **INGREDIENTS** | **%** |
|---|---|---|
| | | |
| 17V41AVG | White Grape Juice Conc | 5.41 |
| 17R08ABW | Apple Juice Conc. | 2.01 |
| 170D8MBJ | Fiber | 1.14 |
| 17C01SUC | 25% Sucralose | 0.02 |
| 1743WHR | Whey Protein Isolate | 3.48 |
| | Flavor and Flavor Modifier | 0.30 |
| | Color | 0.20 |
| 17003PEO | Phosphoric Acid 80% | 0.07 |
| | Water | 87.37 |
| | | |
| | TOTAL | 100.00 |

**Table 3. A fruit punch-flavored beverage according to certain embodiments.**

| | **Fruit Punch** | |
|---|---|---|
| | | |
| | | |
| | **INGREDIENTS** | **%** |
| | | |
| 17V41AVG | White Grape Juice Conc | 5.41 |
| 17R08ABW | Apple Juice Conc. | 2.01 |
| 170D8MBJ | Fiber | 1.14 |
| 17C01SUC | 25% Sucralose | 0.02 |
| 1743WHR | Whey Protein Isolate | 3.48 |
| | Flavor and Flavor Modifier | 0.28 |
| | Color | 0.06 |
| 17003PEO | Phosphoric Acid 80% | 0.07 |
| | Water | 87.53 |
| | | |
| TOTAL | TOTAL | 100.00 |

Given the benefit of the above disclosure and description of exemplary embodiments, it will be apparent to those skilled in the art that numerous alternate and different embodiments are possible in keeping with the general principles of the invention disclosed here. Those skilled in this art will recognize that all such various modifications and alternative embodiments are within the true scope and spirit of the invention. The appended claims are intended to cover all such modifications and alternative embodiments. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A clear high protein beverage comprising:
water;
between about 4% and about 8% by weight protein.

2. The beverage according to claim 1 further comprising a flavorant.

3. The clear high protein beverage of claim 1 or 2 having one or more of the following:
• wherein the protein is between about 4% and about 8% by weight whey protein isolate and/or hydrolyzed collagen,
• a turbidity of less than 10 nephelometric units,
• wherein the protein comprises one or both of alpha-lactalbumin and hydrolyzed collagen, preferably wherein the alpha-lactalbumin and the hydrolyzed collagen are present in a ratio of between about 60:40 to about 70:30 alpha-lactalbumin:hydrolyzed collagen,
• wherein the protein is alpha-lactalbumin,
• wherein the protein comprises one or both of whey protein hydrolysate and collagen, preferably wherein the whey protein hydrolysate and the collagen are present in a ratio of between about 95:5 to about 85:15 whey protein hydrolysate:collagen,
• wherein the flavorant is selected from one or more fruit flavors and botanical flavors,
• wherein the protein has a protein digestibility corrected amino acid score of at least about 0.9,
• wherein the protein has a protein digestibility corrected amino acid score of about 1.0,
• having a protein content of at least about 5 grams of protein per 8 fluid ounce serving, preferably about 5 grams of protein per 4 fluid ounce serving,
• having a protein content of about having a protein content of about 7 grams of protein per 8 fluid ounce serving, preferably about 7 grams of protein per 4 fluid ounce serving,
• having a sweetness of less than about 6° Brix,
• further comprising lactose, or wherein the clear high protein beverage is substantially lactose-free,
• wherein the beverage is unsweetened, or comprises a sweetener.

4. The beverage according to any of the preceding claims comprising between about 2% and about 4% by weight whey protein isolate and one or more L-amino acids, an optional flavorant, wherein the clear high protein water beverage has a sweetness of less than about 6° Brix.

5. A clear high protein beverage comprising:
water; and
between about 4% and about 8% by weight whey protein isolate, wherein the high protein beverage has a sweetness of less than about 6° Brix,
wherein the whey protein isolate is alpha-lactalbumin,
wherein the protein has a protein digestibility corrected amino acid score of at least about 0.9, or a protein digestibility corrected amino acid score of about 1.0,
having a protein content of at least about 5 grams of protein per 4 fluid ounce serving,
preferably having a protein content of about 7 grams protein of per 4 fluid ounce serving.

6. A method for making a clear high protein beverage according to any of the preceding claims comprising combining, in any order:
water;
between about 4% and about 8% by weight protein; and preferably a flavorant, more preferably wherein the protein, flavorant and beverage is as described in any of the preceding claims.

7. Beverage according to any of the preceding claims 1-5, obtainable according to claim 6.
